# EUROPÄISCHE PATENTSCHRIFT

(11) **EP 1 180 941 B1**
(45) Veröffentlichungstag und Bekanntmachung des Hinweises auf die Patenterteilung: **05.03.2003**
(21) Anmeldenummer: 99927798.1
(22) Anmeldetag: 29.05.1999
(51) Int. Cl.: A23G 1/18, A23G 1/04, A23G 1/00

(54) **VERFAHREN ZUR HERSTELLUNG VON FETTSCHMELZE BASIERTEN IMPFKRISTALLSUSPENSIONEN**
METHOD OF PRODUCING SEED CRYSTAL SUSPENSIONS BASED ON MELTED FAT
PROCEDE DE PRODUCTION DE SUSPENSIONS DE CRISTAUX GERMES A BASE DE GRAISSE FONDUE

(43) Veröffentlichungstag der Anmeldung: 27.02.2002
(73) Patentinhaber: Institute für Lebensmittelwissenschaft Laboratorium für Lebensmittel Verfahrenstechnik; ETH-Zentrum/LFO, 8082 Zürich (CH); Camille Bloch S.A., 2608 Courtelary (CH); Maestrani Schokoladen AG, 9011 St. Gallen (CH); Max Felchlin AG, 6430 Schwyz (CH); Société des Produits Nestlé S.A., 1800 Vevey (CH)
(72) Erfinder: WINDHAB, Erich, CH-8261 Hemishofen (CH); ZENG, Yuantong, CH-8046 Zürich (CH)
(74) Vertreter: Beyer, Rudi
(86) Internationale Anmeldenummer: EP9903734
(87) Internationale Veröffentlichungsnummer: WO00072695

(56) Entgegenhaltungen:
- EP-A- 0 496 310
- EP-A- 0 521 205
- WO-A-98/30108
- US-A- 4 594 194
- PATENT ABSTRACTS OF JAPAN vol. 014, no. 562 (C-0788), 13. Dezember 1990 (1990-12-13) & JP 02 242639 A (ASAHI DENKA KOGYO KK), 27. September 1990 (1990-09-27)

## Beschreibung

### Gattung

Die Erfindung betrifft ein Verfahren zur Herstellung von Fettschmelze basierten Impfkristallsuspensionen, insbesondere zur Erzeugung stabiler mikrodisperser Kakaobutterkristallsuspensionen, mit hohem β_{VI}-Modifikationsanteil, und deren Einsatz bei der Impfkristallisation von fettbasierten, disperse Feststoffpartikel enthaltenden Suspensionen wie Schokolade, schokoladeähnlichen Massen oder dergleichen.

Des weiteren betrifft die Erfindung eine Vorrichtung zum Durchführen dieses Verfahrens.

### Stand der Technik

Ziel des sogenannten Vorkristallisationsschrittes in der konventionellen Herstellung von Schokolade und schokoladeähnlichen Massen ist die Erzeugung einer hinreichend großen Anzahl an Fettkristallkeimen, welche nach dem Ausformen bzw. Vergießen der Masse im anschließenden Abkühlprozeß die weitergehende Verfestigungskristallisation initiieren. Es ist dabei von besonderer Wichtigkeit, daß die im Vorkristallisationsschritt erzeugten Keimkristalle in einer gewünschten stabilen Kristallmodifikation vorliegen. Für das Kakaobutterfettsystem sind dies die sogenannten β_{V} und β_{VI}-Kristallmodifikationen, in welchen die hauptsächlichen Triglyceride der Kakaobutter (SOS, POP, SOP, S = Stearin, O = Olein, P = Palmitin) in einem triklinen Kristallgitter angeordnet vorliegen. Sogenannte instabile Modifikationen sind die γ- (amorph), α- (hexagonal) und β_{IV}-(orthorhombisch) Kristallstrukturen. Die Modifikation der Kristallkeime beeinflußt die Bildung weiterer Kristalle bei der Abkühlung und Verfestigung der ausgegossenen vorkristallisierten Massen maßgeblich.

Sofern die Keimkristalle aus überwiegend instabilen Modifikationen bestehen, resultiert folglich auch ein überwiegend instabil erstarrtes Endprodukt nach Abschluß des Kühlvorganges im Produktionsprozeß. Während der Lagerung wandeln sich instabile Kristalle auch bei niedrigen Lagertemperaturen in stabile Modifikationen um, da diese thermodynamisch stabiler und damit energieärmer sind. Kristalle aus instabilen Modifikationen weisen ein weniger dichtes Erstarrungsgefüge auf. Dieses sowie die bei der Modifikationsumwandlung ablaufenden Diffusionsprozesse bedingen, daß insbesondere niedrig schmelzende Fettanteile an die Oberfläche des Schokoladenproduktes "transportiert" werden und dort einen kristallinen Film sogenannter Fettreif, ausbilden. Dieser Fettreif bewirkt die Vergrauung der Schokoladenoberfläche und damit eine deutliche Beeinträchtigung der Schokoladenqualität. Werden bei der Vorkristallisation hinreichend stabile Kristallkeime erzeugt, zeigt sich während der Lagerung keine Fettreifausbildung.

Neben der Erzeugung möglichst stabiler Kristallkeime bei der Vorkristallisation ist es insbesondere auch Ziel, die Gesamtmenge der erzeugten Kristallkeime ohne Gefährdung der effektiven Vorkristallisationsgüte möglichst zu minimieren, da dies zu einer erniedrigten Viskosität beim Ausgießen bzw. Ausformen der vorkristallisierten Masse und damit zu Verarbeitungsvorteilen führt. Niedrige Masseviskositäten sind Voraussetzung für die gleichmäßige Ausformung zum Beispiel bei Herstellung von Schalen für gefüllte Produkte (Hohlkörperherstellung), um gleichmäßige Wanddicken zu gewährleisten.

In herkömmlichen Vorkristallisationsverfahren werden ca. 0,5 bis 2 %, bezogen auf die Gesamtfettmasse, in Form von Keimkristallen verfestigt. In Abhängigkeit von der Herkunft der Kakaobutter (Provenienz) sowie aufgrund der physikalisch/chemischen Wechselwirkung zwischen den Triglyceriden (Fetten) und anderen Rezepturkomponenten (insbesondere Emulgatoren), kann die Kristallisationskinetik unterschiedlich ablaufen. Dies führt bei weitgehend festgelegter Verweilzeit im industriellen Prozeß notwendigerweise zu starken Schwankungen im Vorkristallisationszustand, was sich auf die Produktqualität auswirkt. In der herkömmlichen Vorkristallisationstechnik wird versucht, durch Variation einer stufenweisen Temperaturführung eine möglichst optimale Vorkristallisation zu realisieren. Dies erfordert einerseits viel empirische Erfahrung, andererseits wird bereits bei kleinen Temperaturschwankungen im Vorkristallisationsprozeß (z. B. ± 1° C) die Einstellbarkeit der Kristallisationsgüte häufig problematisch.

Zur Kontrolle der Vorkristallisationsgüte dient in der herkömmlichen Prozeßkontrolle (offline) das sogenannte Tempermeterverfahren. Bei diesem Meβverfahren wird ein kleines Probevolumen, welches bei Vorkristallisationstemperatur dem Vorkristallisationsapparat entnommen wird, in ein Proberöhrchen verbracht, in welchem ein Temperaturfühler zentrisch installiert ist. Das Proberöhrchen wird unter definierten Temperaturbedingungen (Wasserbad) gekühlt und der Temperaturverlauf in der Probe gemessen. Der ermittelte Temperaturverlauf reflektiert den Verlauf der Verfestigungskristallisation in der Probe. Die "Kristallisationsfreudigkeit" kann auf diese Weise mit einem bestimmten Temperaturverlauf (als Funktion der Zeit) aufgrund der Vorkristallisationswärmefreisetzung der Probe identifiziert werden. Je nach Verlauf einer derartigen Temperaturkurve teilt der Praktiker in "Über-, "Unter- und "Gut-Temperiert" ein.

Herkömmliche Verfahren bzw. Anlagen zur Vorkristallisation von Schokoladen arbeiten nach dem Prinzip einer stufenweisen Temperierung. Das bedeutet, daß die bei Temperaturen > 45° C in einen Temper (Vorkristallisator) eintretende Schokoladenmasse in aller Regel in drei Temperierzonen zunächst leicht vorgekühlt (Temperierzone 1: ca. 30° C), dann unterkühlt (Temperierzone 2: 25° bis 27° C), und zuletzt auf Verarbeitungstemperatur erwärmt (Temperierzone 3: 28° bis 31° C) wird. Die Austrittstemperatur aus herkömmlichen Vorkristallisatoren (Tempem) beträgt zwischen 28° und 31° C, in seltenen Fällen leicht über 31° C. Wird eine Masse wie beschrieben vortemperiert, dann zeigt die direkte Analyse der entstandenen Keimkristalle, welche mittels einer sogenannten direkten DSC (Differencial Scanning Calorimetry) Messung an der nach dem Kristallisator entnommenen Masse durchgeführt wird, ein typisches Kristallmodifikationsspektrum. Bei Kakaobutter als kontinuierlicher Fettphase besteht der überwiegende Kristallkeimanteil aus β_{V}-Kristallen (ca. 50 - 70 %), gefolgt von β_{IV}-Kristallen (20 - 40 %) sowie zum Teil aus Resten an α-Kristallen (ca. 10 %). In aller Regel garantiert ein überwiegender Anteil an β_{V}-Kristallen, daß die Verfestigungskristallisation eine hinreichende Strukturqualität erreicht, um Fettreifstabilität und andere Qualitätsmerkmale (z. B. knackiges Bruchverhalten, zarter Schmelz) zu gewährleisten. Dennoch treten bei herkömmlich kristallisierten Schokoladenmassen, insbesondere dann, wenn auch niedrigschmelzende Fettanteile (z. B. Milchfett oder Nußöl) enthalten sind, häufig Qualitätsmängel durch Fettreifbildung auf. Teilweise zeigt sich der Fettreif erst nach 2 - 3 monatiger (teilweise auch längerer) Lagerung. Schokoladen mit Fettreif sind nicht verkäuflich bzw. führen zu Kundenreklamationen.

Aus der WO 98/30108 ist ein Verfahren zur Vorkristallisation von Schokoladen vorbekannt, bei welchem die Produktschmelze mit einem Kristall**pulver** direkt geimpft wird. Wie weiter unten noch dargestellt werden wird, ist das Impfen mittels Kristall**pulvern** mit zahlreichen Nachteilen für die Praxis verbunden.

### Aufgabe

Der Erfindung liegt die Aufgabe zugrunde, konzentrierte (5 - 35 Vol. % Kristallanteil) Impfkristallsuspensionen herzustellen, welche mikrodisperse (Teilchendurchmesser < 10 Mikrometer (µm)) nahezu ausschließlich (≥ 95 %) thermisch hochstabile (höchstschmelzende polymorphe Kristallmodifikation, z. B. β_{VI}-Modifikation bei Kakaobutter) Fettkristalle beinhalten und diese in geringer Konzentration (Kristallanteil ca. 0.01 - 0.2 %) in den vorher auf Impftemperatur gebrachten Produktstrom kontinuierlich, gleichmäßig zuzudosieren sowie homogen einzumischen und damit herkömmliche Verfahren der Vorkristallisation derart zu verbessern, daß auch bei deutlicher Erhöhung (ca. 2 - 3° C) der Massetemperatur über bislang übliche Vorkristallisationstemperaturen (bei Schokoladen bisher maximal ca. 31° C) im Gegensatz zu herkömmlich vorkristallisierten Massen die Kristallkeime nicht derart abschmelzen, daß die gewünschte Kristallisationsinitiierungskapazität bei Abkühlung der Masse verloren geht, sondern im erforderlichen Umfang erhalten bleibt, und daß damit auch bei erhöhten Giestemperaturen von ca. 34° C bei Schokoladen, oder stärkeren Giestemperaturschwankungen, einwandfrei kristallisierte Produkte mit sehr guten Qualitätseigenschaften hergestellt werden können, und darüber hinaus die bei den erfindungsgemäß hohen Verarbeitungstemperaturen sich einstellende Viskositätserniedrigung im Verarbeitungsprozeß vorteilhaft genutzt werden kann.

Des weiteren liegt der Erfindung die Aufgabe zugrunde, eine Vorrichtung zum Durchführen des erfindungsgemäßen Verfahrens bereitzustellen.

### Lösung der Aufgaben

Die Aufgaben werden durch die in den **Patentansprüchen 1** und **13** wiedergegebenen Merkmale gelöst.

### Weitere Ausführungsformen

Weitere erfinderische Ausgestaltungen der erfindungsgemäßen Verfahrensweise sind in den **Patentansprüchen 2** bis **12** und **14** bis **22** beschrieben.

### Einige Vorteile

In dem erfindungsgemäßen Verfahren erfolgt die Herstellung konzentrierter (5 - 35 Vol. % Kristallanteil) Impfkristallsuspensionen, welche mikrodisperse (Teilchendurchmesser < 10 Mikrometer (µm)) ausschließlich thermisch hochstabile (höchstschmelzende polymorphe Kristallmodifikation, 50 - 95 % β_{VI}-Modifikation bei Kakaobutter Rest β_{V}-Modifikation) Fettkristalle beinhalten in einem erfindungsgemäßen bis zu drei Behandlungsschritte umfassenden Prozeß. Diese drei Prozeßschritte sind:
1. Ein Kaltsprühschritt, in welchem eine Fettschmelze (z. B. Kakaobutter) in einen unterkühlten Raum eingesprüht und zu einem rieselfähigen Pulver mit Pulverteilchengrößen von ca. ≤ 100 - 200 Mikrometern (µm) bestehend aus zunächst instabilen Kristallmodifikationen (z. B. γ, α, β_{IV}-Modifikationen bei Kakaobutter) verfestigt wird.
2. Ein mehrstufiger thermischer Konditionierungsschritt, in welchem eine Modifikationsumwandlung der Fettkristalle bis zum Erreichen von ca. 50 %-Anteil der höchststabilen Kristallmodifikation (β_{VI} bei Kakaobutter) erfolgt.
3. Ein Scher-/Dehnbehandlungsschritt, in welchem unter mechanischem Energieeintrag das in einer Fettschmelze suspendierte Kristallpulver aus Schritt 2 geschert/gedehnt wird, wobei unter geeigneter Abstimmung von mechanischem Energieeintrag, Temperatur und Verweilzeit eine Reduktion der suspendierten Kristallpartikelgröße durch partielle Abschmelz- und mechanische Zerteilungsvorgänge und eine nahezu vollständige (≥ 95 %) Modifikationsumwandlung in die höchstschmelzende Kristallmodifikation sowie eine Einstellung des Kristallanteils auf 5 - 35 Gew.% stattfindet Der Scher-/Dehnbehandlungsschritt erfolgt bevorzugt in einem axial durchströmten konzentrischen Zylinderspalt mit rotierendem, in der Drehzahl einstellbaren Innenzylinder, welcher auch wandschabende Aufbauten aufweisen kann. Über die Drehzahl kann dann der Grad der Scherung und Dehnung weitgehend unabhängig vom Massenstrom eingestellt werden.

Die Zugabe von kaltgesprühtem (Prozeßschritt I) und konditioniertem (Prozeßschritt II) ca. 50%-igem β_{VI}-Kakaobutterpulver ist grundsätzlich nur beim ersten Ansetzen der Impfkristallsuspension zwingend notwendig. Wird einem Rest dieser Suspension flüssige Kakaobutter zugesetzt, kann unter konstant gehaltenen Temperier- und Rührbedingungen innerhalb einer Zeit von ca. ≥ 30 - 60 Minuten (abhängig vom mechanischen Energieeintrag) neue Impfsuspension erzeugt werden.

In einer besonderen Ausführungsform des erfindungsgemäßen Prozesses kann die Erzeugung einer Impfkristallsuspension auch ohne die Prozeßschritte I und II erfolgen, d. h. durch direkte Herstellung in einem Scherbehandlungsschritt der unterkühlten Fettschmelze Hierbei besteht jedoch die Notwendigkeit zur Kristallkeimbildungsinitiierung deutlich erniedrigte Wandtemperaturen der durchströmten Schergeometrie von ca. 10 bis 28° C (für Kakaobutter) einzustellen und die Verweilzeiten im Scherströmungsfeld hinreichend, d. h. auf 20 bis 500 s zu verlängern, um einen gewünschten Keimkristallgehalt von 5 bis 35 Gew.% einstellen zu können. In diesem speziellen Falle der Beschränkung auf Prozeßschritt III kann jedoch beim einmaligen Durchlauf des Scherbehandlungsschrittes unter erniedrigter Wandtemperatur kein β_{VI}-Keimkristallgehalt (bei Kakaobutter) > 50 % erreicht werden. Statt dessen bewirken die zur Beschleunigung von Kristallkeimbildungs- und Kristallwachstumskinetik notwendigerweise erniedrigten Wandtemperaturen die Entstehung zusätzlicher β_{V}-Keimkristalle (bei Kakaobutter) im Umfang > 50 %. Sofern ein mehrfacher Durchlauf des Scherbehandlungsschrittes realisiert wird, kann der β_{VI}-Anteil gesteigert werden, wenn ab dem 2. Durchlauf auch eine Erhöhung der Wandtemperatur auf 25 - 32° C erfolgt. Ein mehrfacher Durchlauf des Scherbehandlungsschrittes kann prinzipiell auch durch Hintereinanderschaltung solcher Scherbehandlungsschritte erfolgen.

Bei Schokoladen oder schokoladeähnlichen Massen mit Kakaobutteranteilen am Gesamtfett von ≥ 5 % wird eine wie vorab beschrieben hergestellte Kristallkeimsuspension in Mengenanteilen mit 0,01 bis 0,2 Gew.% Kristallanteil (bezogen auf Gesamtmasse) zu der auf Temperaturen zwischen 32 und 34.5° C bei reinem Kakaobutterfett bzw. zwischen 27 und 34.5° C bei Massen mit Anteilen niedrig schmelzender Fette, vorgekühlten Masse kontinuierlich zudosiert. Die mikrohomogene Vermischung erfolgt in einem in die Produktrohrleitung integrierten, temperierten statischen Mischer.

Die Animpfung mittels einer Keimkristallsuspension läßt gegenüber einer direkten Animpfung mit Kristallpulvern deutliche Vorteile realisieren. Dies sind im wesentlichen:
1. **Verbesserte Dosierbarkeit,** da Fluiddosierung möglich. Die exakte Dosierung von Fettkristallpulvern ist vergleichsweise äußerst schwierig und mit Einschränkungen an die Dosiergüte nur in offene Behältnisse möglich. Offene Behältnisse sind in kontinuierlichen industriellen Prozessen nicht erwünscht (Hygiene, Betriebssicherheit).
2. **Bessere mikrohomogene Vermischung** in der Schokoladenmatrix ergibt sich aufgrund des Vorliegens vereinzelter Impfkristalle in der Suspension. Bei Dosierung von Impfkristallen in Pulverform resultiert in aller Regel eine Teilagglomeration der Pulverteilchen bereits vorab oder sobald der Kontakt zur Fluidphase hergestellt ist.
3. **Deutlich kleinere Keimkristalle** (ca. ≤ 1 bis 10 Mikrometer) sind in der Suspension durch deren mechanische und thermische Beanspruchung z. T. über sogenannte Sekundärnukleation erzeugbar. Vergleichsweise lassen sich mit kaltgesprühten oder kaltgemahlenen Fettpulvern minimale Fettpartikelgrößen von nur ca. 20 - 200 Mikrometern erreichen. Somit kann mit scherbehandelten Impfkristallsuspensionen bei deutlich niedrigerer Impfkristallmassenzudosierung eine höhere Kristallkeimanzahldichte im Produktvolumen (Schokolade) als mit Pulvern erreicht werden.
   Dies führt zu einer homogeneren und schnelleren Verfestigung des Produktes bei anschließender Kühlung in einem Kühltunnel.
4. Eine **höhere Impfeffizienz** kann trotz verringerter Gesamtmenge an zugesetzten Kristallen bei Einsatz von Impfkristallsuspensionen gegenüber Kristallpulvern zur Einstellung einer vergleichbaren Vorkristallisationsgüte (auf Grund Punkte 1 - 3) erreicht werden. Dies hat zur Folge, daß sich die Verarbeitungsviskosität der Masse nach Impfkristallzudosierung im Falle von Impfkristallsuspensionen nicht wie bei Zusatz von Impfpulvern erhöht, sondern sogar weiter erniedrigt werden kann. Dies schafft Vorteile für den Weiterverarbeitungsprozeß (z. B. Gießprozeß).

Bei der Verfestigungskristallisation werden in Schokoladenmassen bzw. schokoladeähnlichen Massen, welche mit β_{VI}-Kristallsuspension geimpft wurden, überraschenderweise überwiegend β_{V}-Kristalle sowie gegebenenfalls ein sehr kleiner Anteil (< 5 %) an β_{IV}-Kristallen, erzeugt. Damit weisen mit β_{IV}-Kristallkeimen impfvorkristallisierte Schokoladenmassen im Vergleich zu herkömmlich gut vorkristallisierten Schokoladenmassen in aller Regel kein signifikant zu höheren Schmelztemperaturen verschobenes Schmelztemperaturspektrum auf. α-Anteile werden nicht beobachtet. Da die β_{V}-Modifikation ebenso wie die β_{VI}-Modifikation (Impfkeime) dieselbe Kristallgitterstruktur (triklines Kristallgitter) besitzen, erscheint die beschriebene Auswirkung der β_{VI}-Animpfung, d.h. die Erzeugung von nahezu ausschließlich β_{V}-Kristallen, physikalisch durchaus folgerichtig, wenngleich überraschend.

Ein wesentlicher Unterschied zwischen herkömmlicher Vorkristallisation und Impfvorkristallisation mit β_{VI}-Keimen besteht im Hinblick auf die mögliche Austrittstemperatur aus dem Vorkristallisationsprozeß. In herkömmlich vorkristallisierten Massen, welche typischerweise bei Temperaturen von 28 - 31° C weiterverarbeitet werden (Gieß-, Formprozesse), sind bei Temperaturen ≥ ca. 31,5 bis 32° C keine hinreichend wirksamen Mengen an Keimkristallen mehr vorhanden. Die Masse kristallisiert dann unkontrolliert. Im Falle der Impfkristallisation mit β_{VI}-Kristallkeimsuspensionen werden selbst bei Masseaustrittstemperaturen (bzw. Impftemperaturen) von 34° - 34,5° C noch ausreichend Keimkristalle erhalten, um den weiteren Ablauf der Kristallisation definiert abfolgen zu lassen.

Im Unterschied zu im konventionellen Vorkristallisationsprozeß erzeugten β_{V}-Kristallkeimen besitzen die bei der Impfkristallisation zudosierten Kakaobutter β_{VI}-Kristallkeime einen zu deutlich höheren Temperaturen verschobenen Schmelztemperaturbereich (ca. 34° - 39° C), jedoch dieselbe Kristallgitterstruktur (trikline Gitterstruktur). Der Schmelzbeginn von β_{VI}-Impfkristallen liegt bei ca. 34° C. Herkömmlich erzeugte Keimkristalle in der Vorkristallisation sind bei 32,5° C bereits nahezu komplett abgeschmolzen. Damit resultiert für die herkömmliche Vorkristallisation in der Regel eine starke Abhängigkeit der Vorkristallisationsgüte von der Austrittstemperatur am Vorkristallisator (meist ca. 29° - 31° C). Produktionsübliche Schwankungen von +/- 0.5° - 1° C können bereits starke Vorkristallisationsunterschiede bewirken. Vergleichbare Temperaturschwankungen bei der Impfvorkristallisation im Temperaturbereich bis ca. 34° C (Mitteltemperatur) zeigen keinen Einfluß auf die Vorkristallisationsgüte.

Weitere vorteilhafte Eigenschaften und Wirkungen ergeben sich aus der nachfolgenden Beschreibung der Zeichnungen, in der die Erfindung - teils schematisch - beispielsweise veranschaulicht ist. Es zeigen:
- Fig. 1: eine schematische Darstellung des Verfahrens zur Herstellung von fettbasierten Impfkristallsuspensionen mit hochstabilen Fettkeimkristallen und deren Einsatz bei der Impfkristallisation unter Einsatz von kaltgesprühtem Fettpulver;
- Fig. 2: eine schematische Darstellung des Verfahrens zur Herstellung von fettbasierten Impfkristallsuspensionen mit hochstabilen Fettkeimkristallen und deren Einsatz bei der Impfkristallisation ohne Einsatz von Fettpulver;
- Fig. 3: eine Darstellung der Vorrichtung zur Herstellung der Impfkristallsuspension sowie deren Dosierung und Einmischung bei der Impfkristallisation;
- Fig. 4: Einbauten in das Scher-/Dehnmodul zur verbesserten Kristallfeindispergierung;
- Fig. 5: eine Einzelheit aus Fig. 4 in größerem Maßstab, teils im Schnitt;
- Fig. 6: eine Einzelheit aus Fig. 4, abgebrochen dargestellt und in größerem Maßstab, ebenfalls im Schnitt;
- Fig. 7: Geometrie von rotierender Welle und wandschabenden Messereinbauten zur Erzielung alternierender Ausstreich-/Dehn und Wandabschabevorgängen;
- Fig. 8: eine vergleichende Untersuchung Impfvorkristallisierter und konventionell vorkristallisierter Schokolade mittels Differentialthermoanalyse;
- Fig. 9: das Schmelztemperaturspektrum der reinen Impfkristallsuspension;
- Fig. 10: Temperkurven für bei unterschiedlichen Temperaturen impfvorkristallisierten Schokoladenmassen;
- Fig. 11: Temperkurven für eine konventionell bei verschiedenen Temperaturen vorkristallisierte Schokolade;
- Fig. 12: Viskosität impfkristallisierter Massen in Abhängigkeit der Zeit;
- Fig. 13: Schmelztemperaturspektren von nur in einem Scher-/Dehnmodul ohne Einsatz eines kaltgesprühten Kakaobutterpulvers erzeugten Impfkristallsuspensionen;
- Fig. 14: Schmelztemperaturspektren von in einem 2-stufigen Scher-/Dehnmodul ohne Einsatz eines kaltgesprühten Kakaobutterpulvers erzeugten Impfkristallsuspensionen;
- Fig. 15: Zweistufiges Scher-/Dehnmodul (Prinzipskizze);
- Fig. 16: Aufbau der Steuerung/Regelung zur Einstellung von Austrittstemperatur und Impfkristallgehalt und
- Fig. 17: zeigt als Funktion der Drehzahl erzeugte Kristallgehalte einer Impfkristallsuspension zwischen 5 und 22 %.

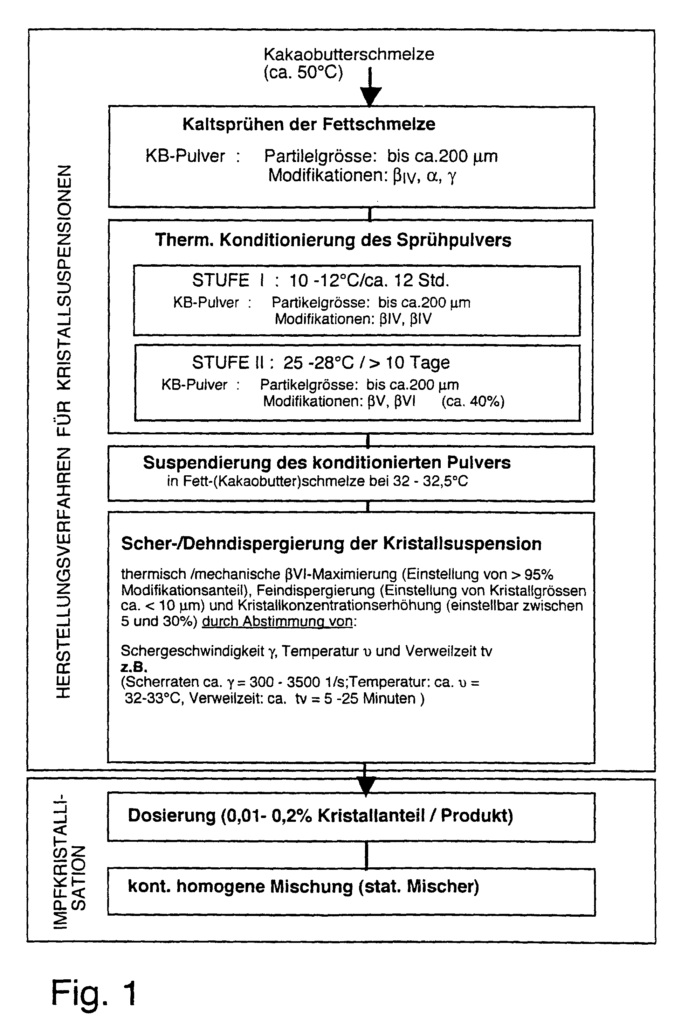

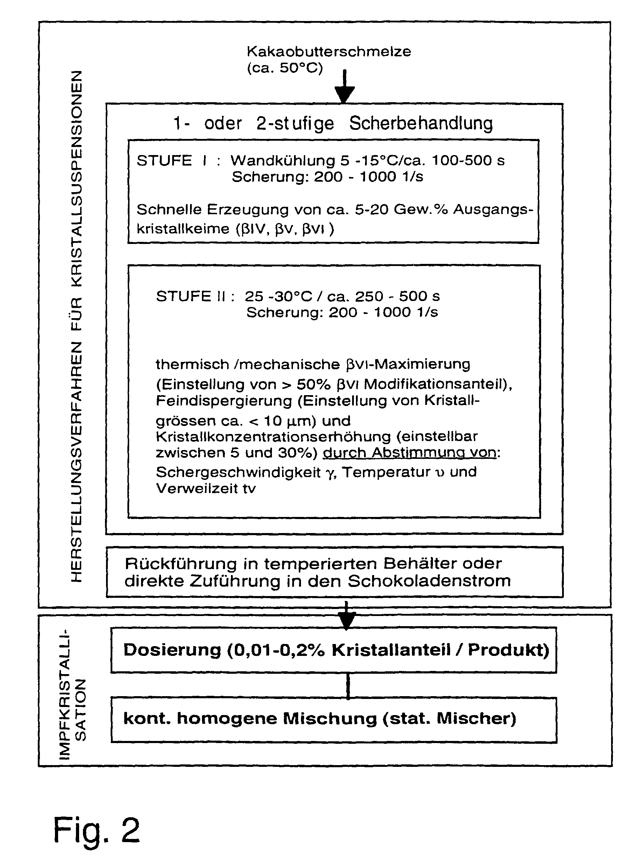

Die Fig. 1 und 2 beschreiben das Verfahren zur Herstellung von fettbasierten Impfkristallsuspensionen mit hochstabilen Fettkeimkristallen und deren Einsatz bei der Impfkristallisation schematisch.

Fig. 1 berücksichtigt den Einsatz von kaltgesprühten Fettpulvern als Ausgangskeimkristalle, während Fig. 2 die besondere erfindungsgemäße Ausführungsform des Verfahrens ohne den Einsatz von Fettpulvern beschreibt. Hier werden die Ausgangskeimkristalle in einem Scherbehandlungsschritt in der Fettschmelze direkt erzeugt.

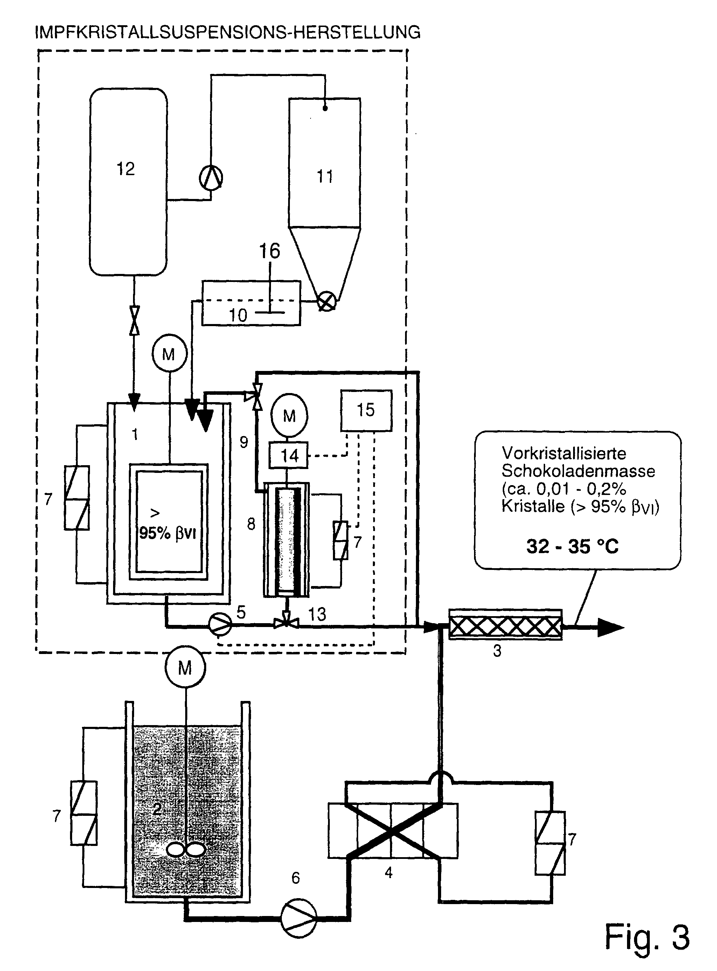

In Fig. 3 ist die Vorrichtung zur Erzeugung von erfindungsgemäßen konzentrierten Impfkristallsuspensionen mit hochstabilen, feindispersen Fettkristallen dargestellt.

Das Bezugszeichen 1 bezeichnet einen Vorlagebehälter für Kakaobutter, in dem die Kristallsuspension bei etwa 32° bis 33° C bereitgehalten wird. Das Bezugszeichen 2 bezeichnet in Fig. 3 einen Vorlagebehälter mit Schokoladenmasse, die mit einer Temperatur von 50° C bereit gehalten wird.

Bei 3 ist ein statischer Mischer veranschaulicht, während 4 einen Wärmetauscher darstellt.

Mit dem Bezugszeichen 5 ist eine Dosierpumpe bezeichnet, während 6 eine Prozeßpumpe darstellt, mit der die Schokoladenmasse gefördert werden kann.

Bei 7 sind Umwälzthermostate dargestellt, während 8 ein sogenanntes Scher-/Dehnmodul betrifft. Mit 9 ist eine als Leitung ausgebildete Suspensionsrückführung bezeichnet und mit 10 eine mehrstufige thermische Konditionierung.

Das Bezugszeichen 11 bezeichnet einen Kaltsprühturm, in dem die betreffende Fettmasse bei etwa -40° C bis 0° C kaltgesprüht wird.

Ein Kakaobuttertank ist mit dem Bezugszeichen 12 bezeichnet, in dem die Kakaobutter bei 50° bis 60° C bereit gehalten wird.

Mit 13 ist ein 3-Wege Hahn bezeichnet, während 14 eine Drehmomentmeßvorrichtung betrifft. Das Bezugszeichen 15 betrifft eine Regeleinheit für das Scher-/Dehnmodul 8.

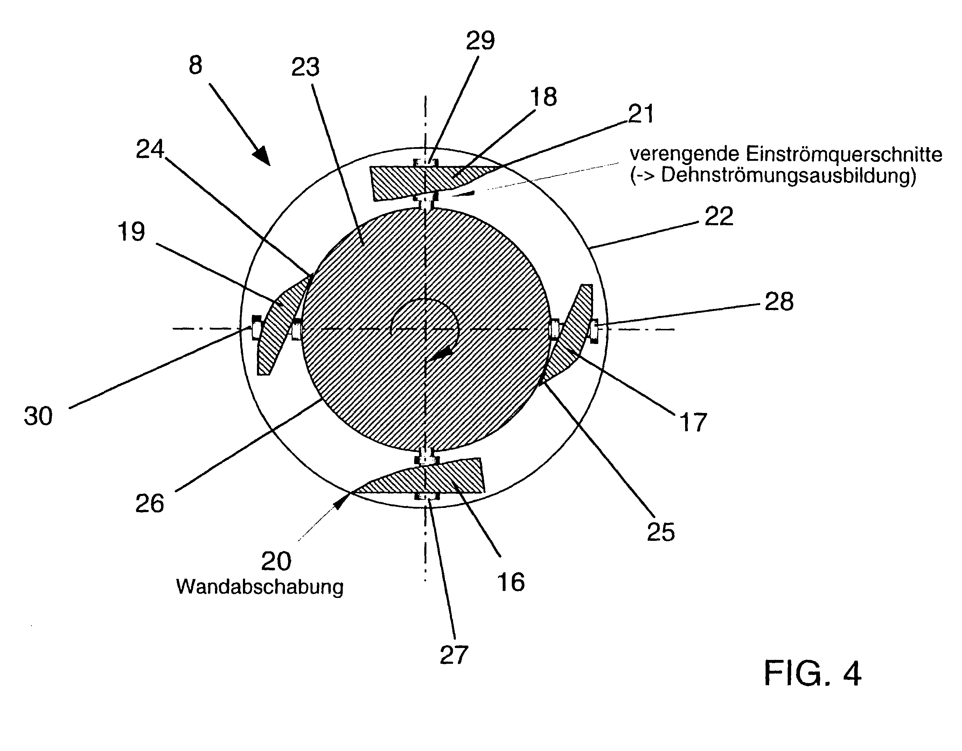

Fig. 4 beschreibt in das Schermodul 8 integrierte mitrotierende Einbauten, welche einerseits das Abschaben von neugebildeten Kristallen von der temperierten (gekühlten) Wand ermöglichen und andererseits bei entsprechender erfindungsgemäßer Formgebung der Einbauten (Fig. 4; Pos. 3), wie in Fig. 4 dargestellt, die Erzeugung von Dehnströmungen (in Strömungsrichtung beschleunigte laminare Strömungen) realisieren lassen. Dehnströmungen sind insbesondere effizient bei der Feindispergierung der Kristalle bzw. Kristallagglomerate.

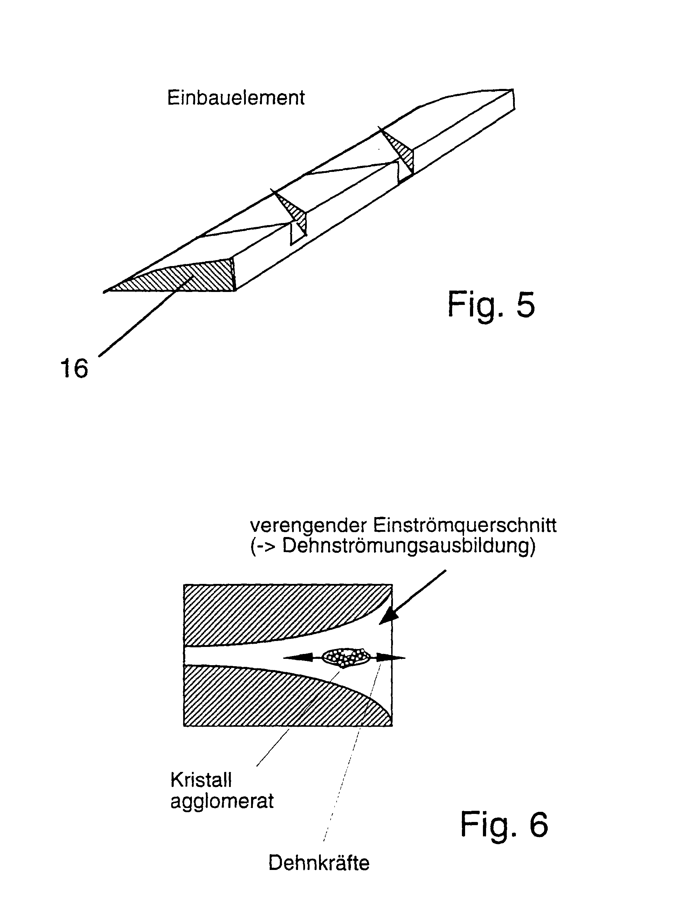

In den Fig. 4 bis 6 sind die in das Schermodul 8 integrierten mitrotierenden, als Scher-/Dehnelemente ausgebildeten Einbauelemente 16, 17, 18 und 19 dargestellt, die im wesentlichen wie Tragflügel ausgebildet und zur einen, gleichen Seite hin konisch spitz bzw. verjüngt zulaufend gestaltet sind. Wie man insbesondere aus Fig. 4 erkennt, liegen die Einbauelemente 16 und 18 mit ihren spitz bzw. verjüngt zulaufenden Kantenbereichen 20, 21 an der inneren Zylindermantelfläche 22 einer Trommel an, in der ein motorisch angetriebener Wellenkörper 23 koaxial angeordnet ist. Diesem Wellenkörper 23 sind auf diametral gegenüberliegenden Seiten die beiden Einbauelemente 17 und 19 zugeordnet, die prinzipiell wie die Einbauelemente 16 und 18 gestaltet sind, also eine ebenfalls flügelartige Erstreckung (Fig. 6) aufweisen und mit ihren spitz bzw. verjüngt zulaufenden Kantenbereichen 24 und 25 an der äußeren Peripherie 26 des Behälters 23 anliegen. Auf diese Weise sind die Einbauelemente 16 und 18 in der Lage, an der inneren Zylindermantelfläche 22 anzuliegen, und damit die Strömung im Spalt zwischen innerer Zylindermantelfläche 22 und den äußeren Kanten der Einbauelemente 16 und 18 zu beschleunigen, während die Einbauelemente 17 und 19 schabend an der Peripherie 26 anliegen.

Aus Fig. 4 ist ferner zu erkennen, daß die Einbauelemente 16 bis 19 jeweils über Lagerelemente 27 bis 30 mit dem Behälter 23 verbunden sind. Die Lagerelemente 27 bis 30 können synchron oder einzeln einstellbar und in der jeweiligen Position auch arretierbar sein. Des weiteren ist es möglich, die Lagerelemente 27 bis 30 so auszugestalten, daß sie in der Lage sind, die flügelförmigen Einbauelemente 16 bis 19 hinsichtlich ihres Anstellwinkels einzustellen oder nachzustellen, um so die Kantenbereiche 20, 21 bzw. 24, 25 in Bezug auf die jeweilige Zylindermantelfläche räumlich und/oder mit dem erforderlichen Anpreßdruck zu positionieren und zu arretieren. Zu diesem Zweck kann den Lagerelementen 27 bis 30 auch ein jeweils nicht dargestelltes Federelement zugeordnet sein, so daß die flügelartigen Einbauelemente gegebenenfalls federelastisch an den zugeordneten Zylindermantelflächen anliegen. Dieses federelastische Anliegen kann auch durch Hydraulikzylinder erzielt werden (nicht dargestellt).

Die rotierenden Einbauelemente 16 bis 19 sind als Scherelemente ausgebildet und rotieren mit dem Wellenkörper 23. Die Elemente 17 und 19 ermöglichen das Abschaben von neu gebildeten Kristallen von der temperierten (gekühlten) Wand. Die Elemente 16 und 18 streichen die Fluidmasse an der inneren Zylindermantelfläche 22 aus. Des weiteren ergibt sich aus Fig. 5, daß bei entsprechender erfindungsgemäßer Formgebung der Einbauelemente 16 bis 19 sich Dehnströmungen in den verengenden Einströmquerschnitten zwischen den flügelartigen Einbauelementen 16 bis 19 einerseits und der zugeordneten Zylindermantelfläche 26 andererseits und damit beschleunigte laminare Strömungen realisieren lassen. Derartige Dehnströmungen sind insbesondere effizient bei der Feindispergierung der Kristalle bzw. Kristallagglomerate wie dies in Fig. 5 schematisch und ausschnittsweise angedeutet ist.

Für das Kaltsprühen der Fettschmelze in dem Kaltsprühturm 11 wird ein Kaltgasstrom erzeugt, welcher eine Temperatur von 10° bis 50° C unterhalb der Kristallisationstemperatur des gesprühten Fettsystems besitzt und Fettsprühteilchen mit Durchmesser von ≤ 100 bis 200 Mikrometern (µm) besitzen, welche im Anschluß in die als Temperierkammer ausgebildete thermische, mehrstufige Konditionierung 10 überführt werden, wo in einer zwei- oder mehrstufigen thermischen Konditionierung die kontrollierte Modifikationsumwandlung (Ausbildung von ≥ 10 bis 50 % β_{VI}-Anteil) ohne Verklumpung der Sprühpulverteilchen stattfindet. Anschließend werden die konditionierten Pulver in einem temperierten Rühr-/Mischbehälter in einer auf 32° bis 32,5° C unterkühlten Fettschmelze (Kakaobutter) suspendiert sowie im Anschluß daran diese Sprühpulversuspension in dem kontinuierlich axial durchströmten Schermodul 8, bevorzugt bestehend aus einem konzentrischen Zylinderscherspalt, welcher ≤ 5 mm Spaltweite besitzt, bei gleichzeitiger Kühlung der Scherspaltaußenwand, also der inneren Zylindermantelfläche 22 unter Einstellung der axialen Durchströmgeschwindigkeit des Scherspaltes durch Rotation des als Innenzylinder ausgebildeten Behälters 23 derart geschert, daß die Austrittstemperatur der Kristallsuspension aus dem Scherspalt aufgrund überlagerter viskoser Energiedissipation durch Scherung und Wärmeabfuhr zwischen 32° und 34° C auf 0,5° C genau einstellbar ist und gleichzeitig eine Feindispergierung der Kristalle auf Durchmesser von ≤ 10 Mikrometern (µm), von 100 bis 200 µm Ausgangsgröße und ferner Abhängigkeit von Wandtemperatur und Verweilzeit im Scherspalt die austretende Kristallsuspension auf Kristallgehalte von 5 bis 35 %, kontrollier- und regelbar über das auf den rotierenden Innenzylinder 23 übertragene. Drehmoment, eingestellt wird. Danach wird die lmpfkristallsuspension mit einer mechanisch schonend arbeitenden Dosierpumpe 5 dem auf 32° bis 34° C temperierten Produktstrom kontinuierlich zudosiert und in diesem mittels eines statischen Mischers 3 schonend und homogen eingemischt.

Die Dosierpumpe 5 stellt sicher, daß die axiale Durchströmungsgeschwindigkeit durch das Schermodul 8 entsprechend der Scherspaltweite und dem Dosiermassenstrom für die Zudosierung von 0,01 bis 0,2 % Kristallanteil zum Produktstrom eingehalten wird und entweder nach einmaligem Direktdurchlauf der Kristallsuspension durch das Schermodul 8 diese in den Produktstrom eindosiert oder aber aus dem Rührbehälter in welchem im Schermodul 8 mehrfach behandelte Kristallsuspension rückvermischt wird, diese Suspension in den Rückproduktstrom dosiert wird.

Über die Steuer-/Regeleinheit für das Schermodul 8 erfolgt eine Abstimmung der Drehzahl des als Innenzylinder ausgebildeten Wellenkörpers 23, der Wandkühltemperatur des Außenzylinders mit seiner Zylindermantelfläche 22 und dem Massedurchsatz bzw. der Verweilzeit im Reaktionsraum des Schermoduls 8, eingestellt über die Drehzahl der Dosierpumpe 5, und zwar derart, daß sich Impfkristallgrößen von ≤ 10 bis 20 Mikrometern (µm) einstellen lassen und die Austrittstemperatur der Suspension im Falle von Kakaobutter zwischen 32° C und 34,5° C mit einer Genauigkeit von +/- 0,25° C eingestellt werden kann.

Der in den Produktstrom des anzuimpfenden Produktes (Schokoladenmassen oder dergleichen) zu integrierende statische Mischer 3 besitzt hinreichend große Durchströmspalten, in welchen bei für Schokoladenprodukten relevanten Viskositäten von ca. 0,1 bis 5 Pas und vorgegebenen Masseströmen die lokale viskose Energiedissipation hinreichend klein bleibt, um eine Erwärmung des Produktes auf Temperaturen größer 34,5° C bei reinen β_{VI}-Kakaobutter-Kristallkeimen zu vermeiden. Dabei ist es möglich, eine erhöhte Anzahl von ≥ 10 bis 12 statischen Mischelementen in Serie zu schalten, um eine minimale Mischgüte von 95 % zu gewährleisten.

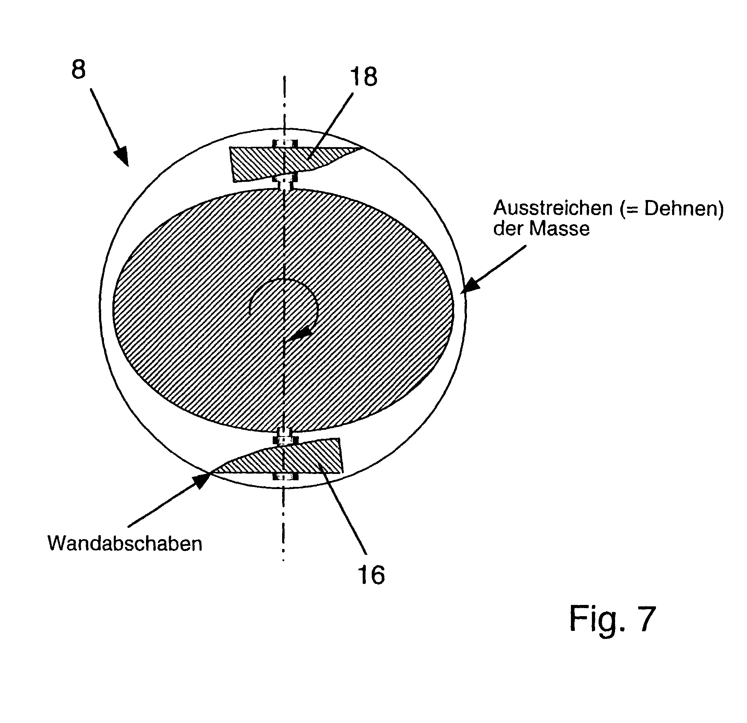

In Fig. 7 ist eine alternative Geometrie des rotierenden Innenzylinders dargestellt, welche erfindungsgemäß wandschabende Elemente mit "Ausstreich-Dehnzonen" erzeugt durch die ovale Geometrie des Innenzylinders vereint.

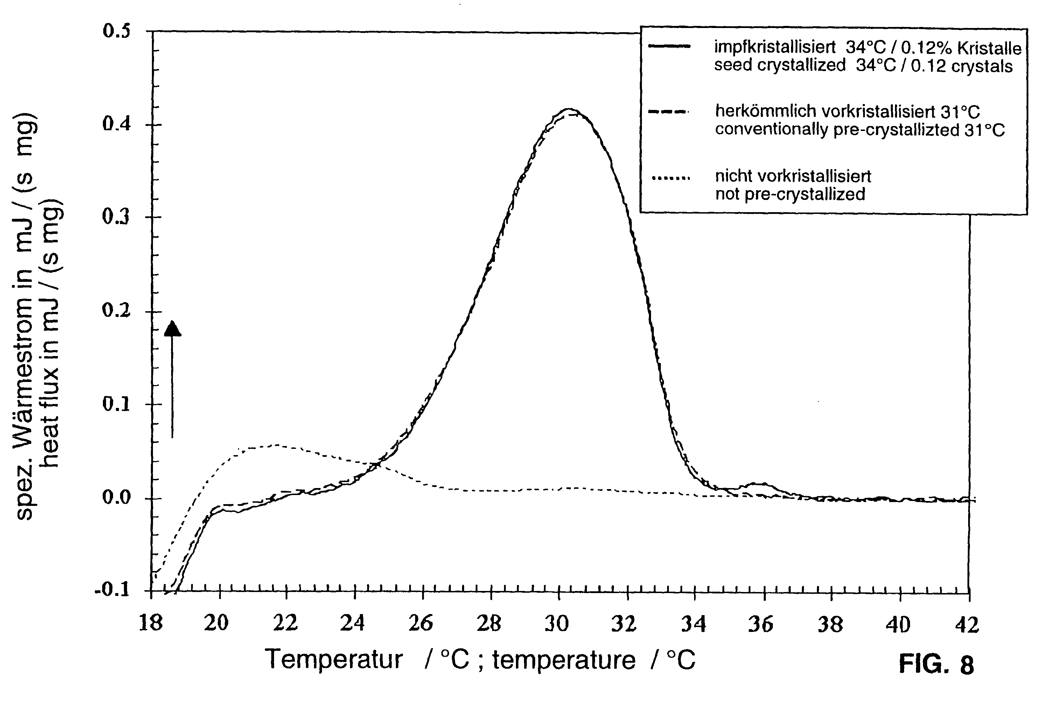

In Fig. 8 sind die mittels Differentialthermoanalyse DSC aufgezeichneten Schmelztemperatur- bzw. Schmelzenthalpiespektren vergleichend für zwei vorkristallisierte Schokoladenmassen nach Ablauf der Vorkristallisation mittels konventioneller und Impfkristallisationsmethode dargestellt. Die in Fig. 8 aufgezeigten Schmelzenthalpiespektren sind nach dem Verfestigungsprozeß aufgenommen. Es zeigt sich für die konventionell und die impfkristallisierte Masse ein überwiegend aus β_{V}-Kristallanteilen (ca. 65 - 75 %) bestehendes Fettkristallgefüge. Ein kleiner Peak im Bereich 34,5 - 37° C zeigt das Vorhandensein der β_{VI}-Impfkristalle.

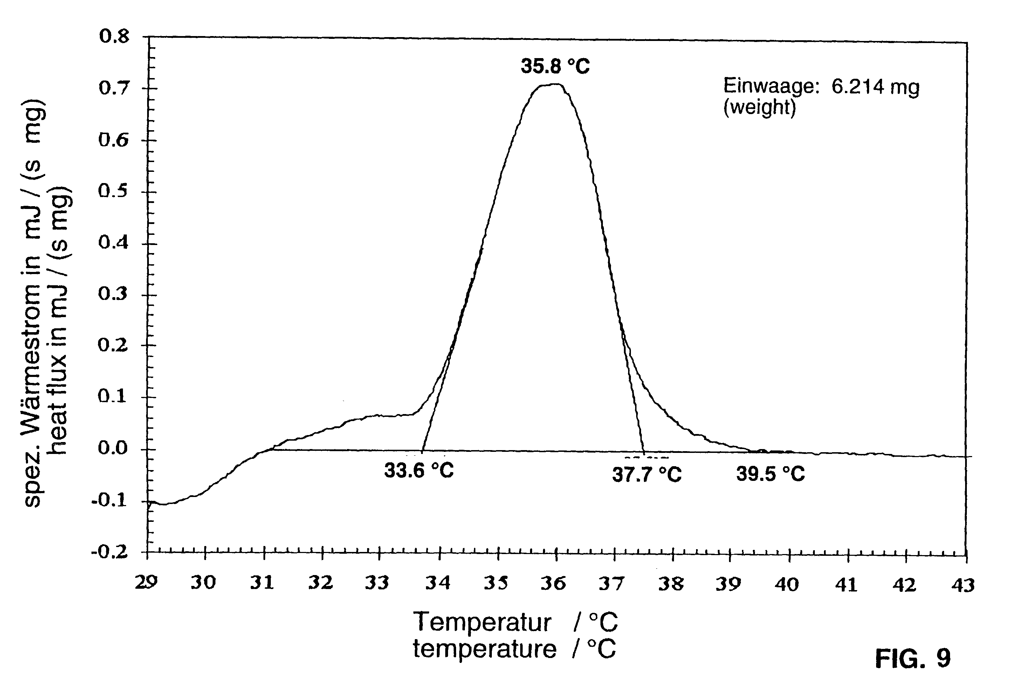

Ferner ist das Schmelztemperaturspektrum der reinen Impfkristallsuspension in Fig. 9 aufgenommen.

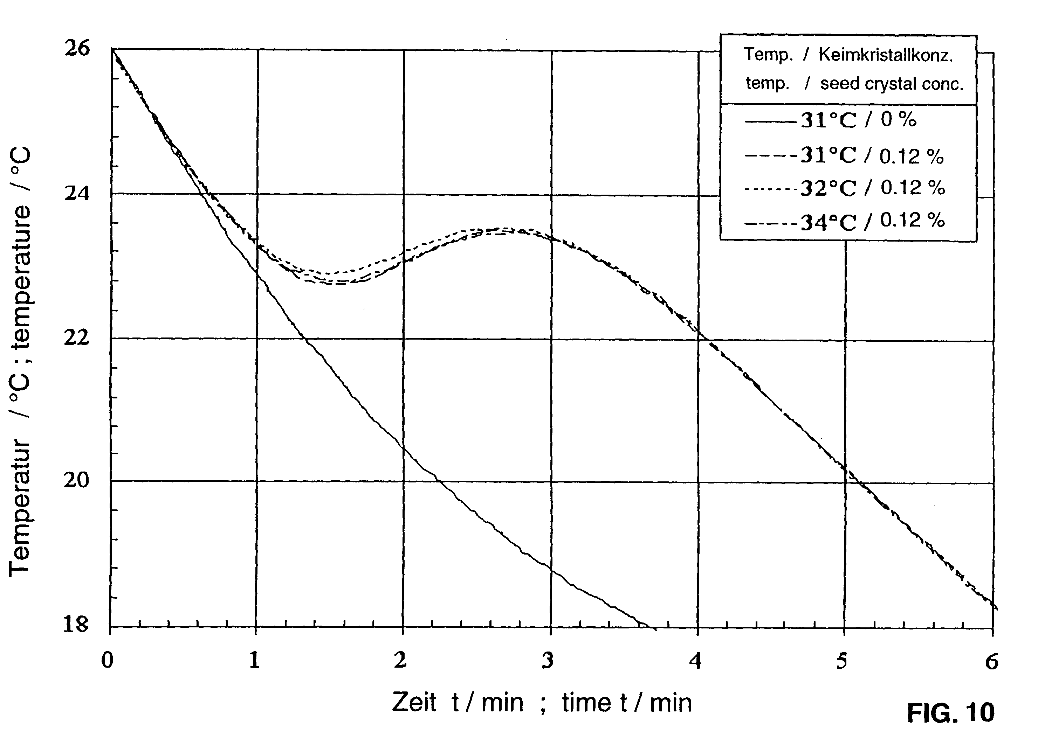

In Fig. 10 sind sogenannte Temperkurven für bei unterschiedlichen Temperaturen impfvorkristallisierten Schokoladenmassen dargestellt. Diese Temperkurven beschreiben den Verlauf der Kristallisationswärmeentwicklung in einer Schokoladenmasseprobe, welche nach dem Vorkristallisationsprozeß entnommen und bei 8° C in einem Proberöhrchen im Wasserbad gekühlt wird. Sofern in der vorkristallisierten Masse hinreichend Keimkristalle vorhanden sind, bildet sich der S-förmige Temperaturverlauf aus. Die für 34° C Austrittstemperatur aufgenommene Termperkurve für impfvorkristallisierte Schokoladenmasse zeigt immer noch den entsprechenden S-förmigen Temperaturverlauf.

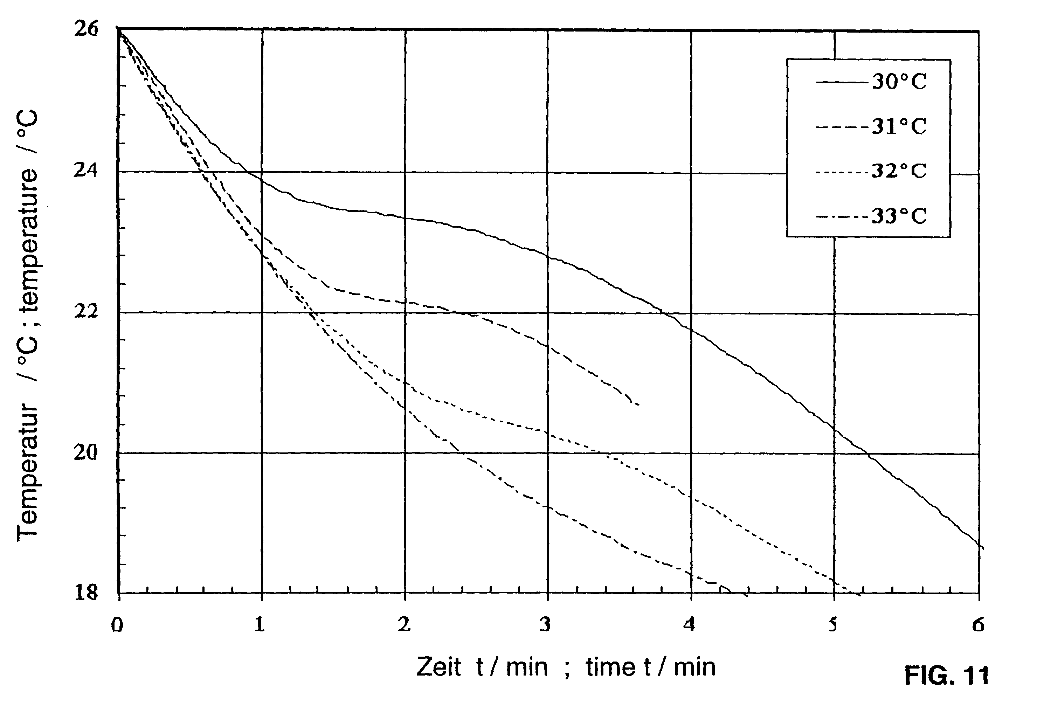

Vergleichsweise zeigt Fig. 11 für eine konventionell kristallisierte Schokolade eine bei 32° C Austrittstemperatur aufgenommene Temperkurve mit bereits deutlich untertemperiertem (Kristallmangel !) Kurvenverlauf. Dies bedeutet das nicht mehr hinreichende Vorhandensein von Keimkristallen.

Vergleichende Untersuchungen der Qualitätseigenschaften von konventionell und impfvorkristallisierten Schokoladenmassen zeigten in einer Vielzahl von verschiedenen Rezepturen zumindest gleichartige Qualität der impfkristallisierten Masse, vielfach jedoch verbesserte Fettreifstabilität der impfkristallisierten Proben. In der Textur (Bruch, Bißfestigkeit) weisen impfkristallisierte Massen häufig eine leicht erhöhte Festigkeit gegenüber konventionell hergestellten Massen auf. Diese Festigkeitserhöhung wird in den meisten Fällen ebenfalls als gewünschte Verbesserung bewertet.

Insbesondere Massen mit Fremdfettanteilen, welche nur verzögert kristallisieren, können auf herkömmlichen Temperieranlagen nicht oder nur unvollständig vorkristallisiert werden. Dies hat zur Folge, daß ein langer Kühltunnel bzw. niedrige Kühltemperaturen (mit nachhaltig negativen Folgen für den Oberflächenglanz) bzw. lange Verweilzeiten im Kühltunnel notwendig sind. Diese Nachteile lassen sich mittels Impfvorkristallisation deutlich reduzieren.

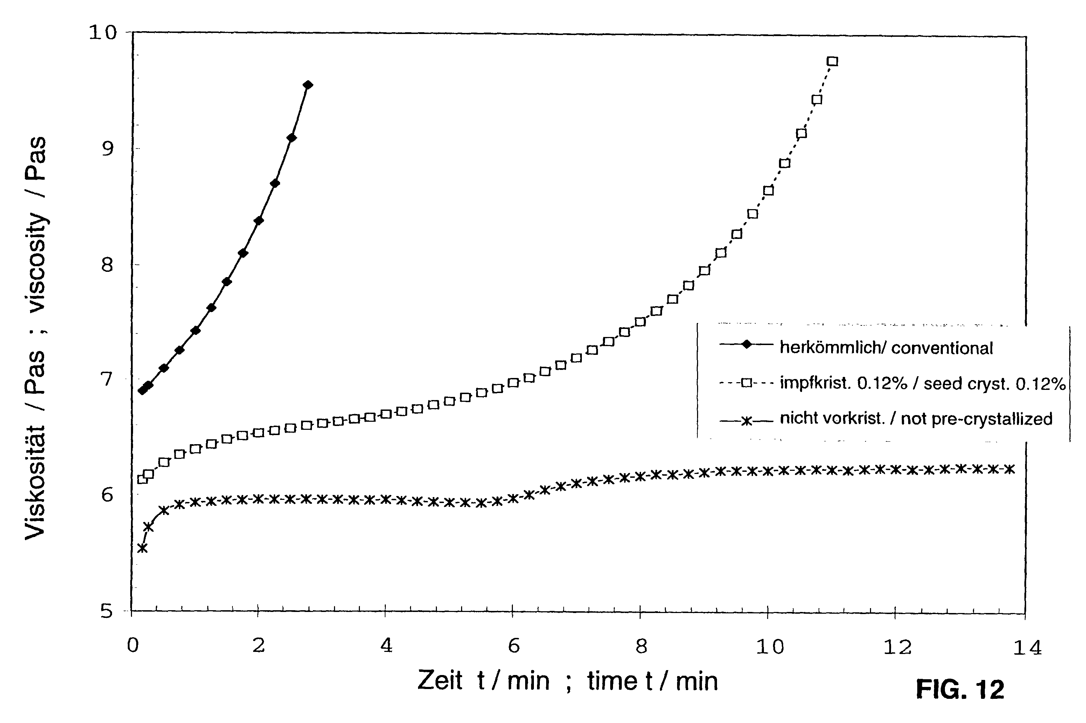

Besonders deutlich wird bei impfkristallisierten Massen deren stark erniedrigte Viskosität gegenüber herkömmlich kristallisierten und deren damit ebenfalls einhergehende verbesserte und längere Verarbeitbarkeit bei Prozeßaustrittstemperatur (vgl. Fig. 12). Eine erniedrigte Viskosität ist bei der Weiterverarbeitung von besonderem Vorteil. Entsprechend lassen sich auch Rezepturen mit verringertem Fettanteil und dennoch hinreichender Fließfähigkeit für den Weiterverarbeitungsprozeß mittels Impfkristallisationsverfahren erzeugen.

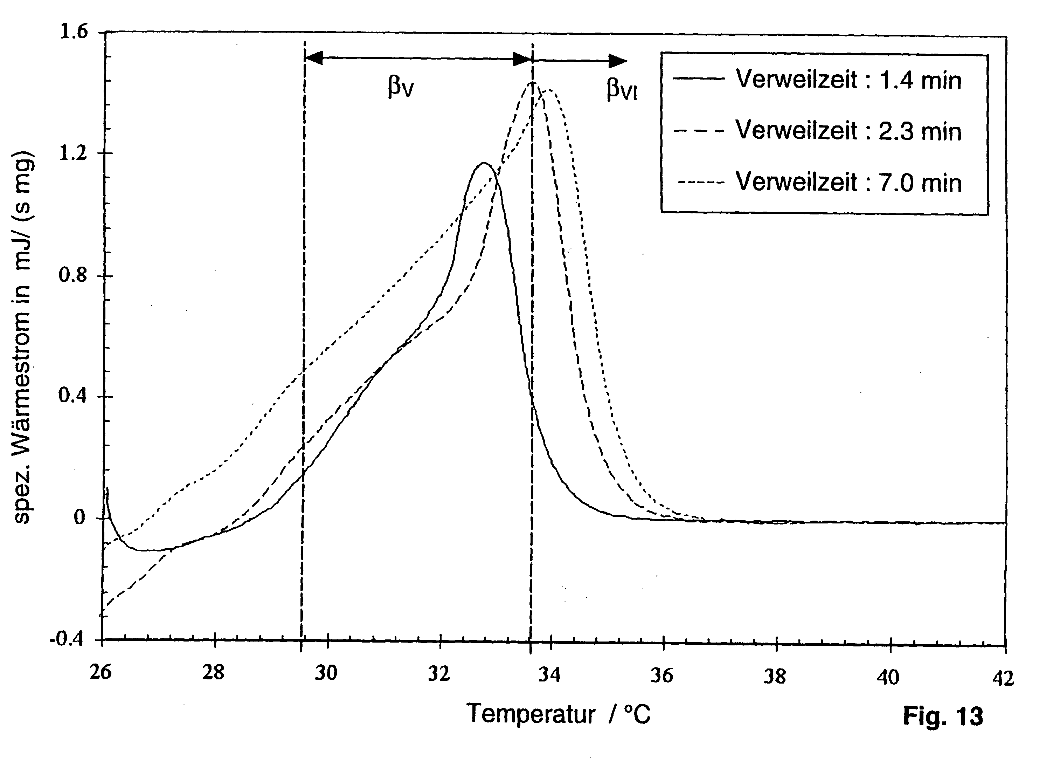

Fig. 13 zeigt anhand von kalorimetrischen Meßkurven (Schmelzenthalpiespektren), daß auch bei alleinigem Einsatz eines einstufigen Schermoduls hohe Anteile an β_{VI}-Kristallanteilen (ca. 50 %; Rest β_{V}) erzielt werden können (Kristallanteil entspricht der Fläche unter den gezeigten Kurven).

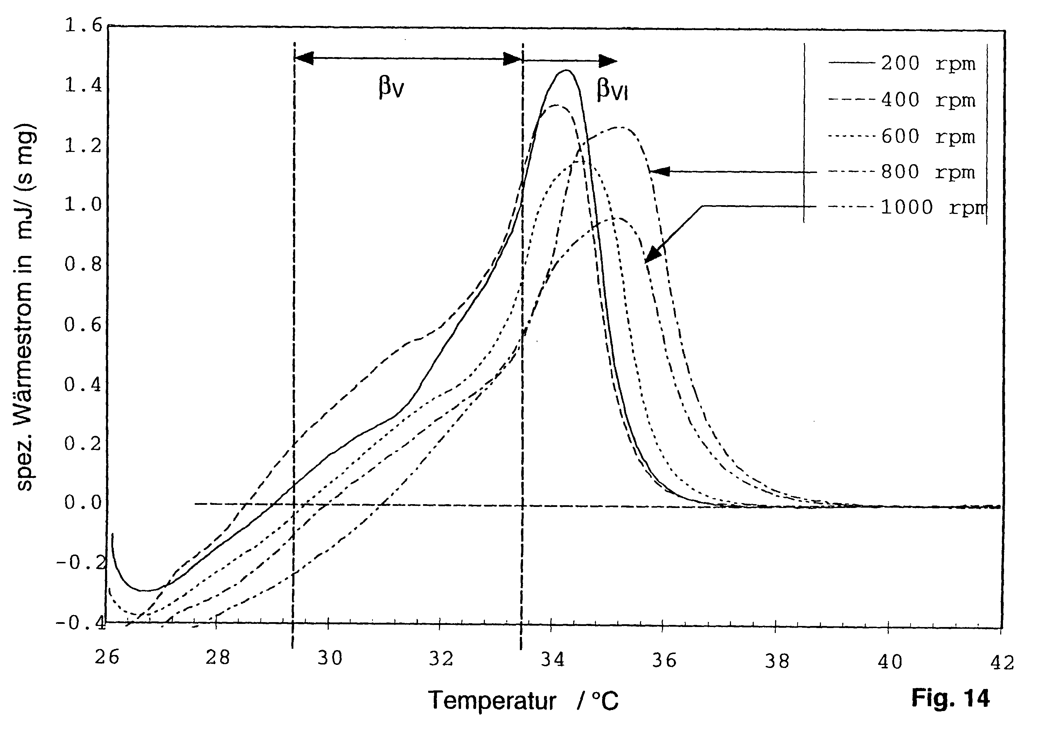

In Fig. 14 ist für ein zweistufiges Schermodul mit zwei Temperierzonen ebenfalls anhand der Schmelzenthalpiespektren gezeigt, daß der β_{VI}-Kristallanteil mit dieser Schermodulausführung bei optimierter Abstimmung von Drehzahl (Stufe I: 900 1/min, Stufe II: Optimum bei 800 1/min), Wandtemperaturen (Stufe I: 10° C, Stufe II: 30° C) und Verweilzeit (Stufe I: 420 s, Stufe II: 420 s) bis zu ca. 90 % gesteigert werden kann.

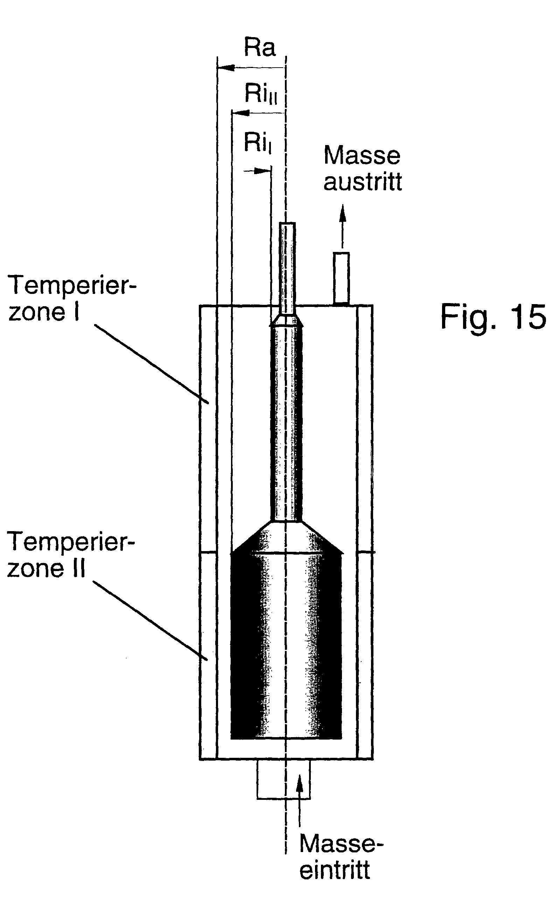

Fig. 15 zeigt den schematischen Aufbau eines zweistufigen Schermoduls mit zwei Temperier- und Scherzonen. Die Innenzylinderbereiche können zusätzlich mit den in den Fig. 4 und 7 beschriebenen Einbauten bzw. Geometrien ausgeführt sein.

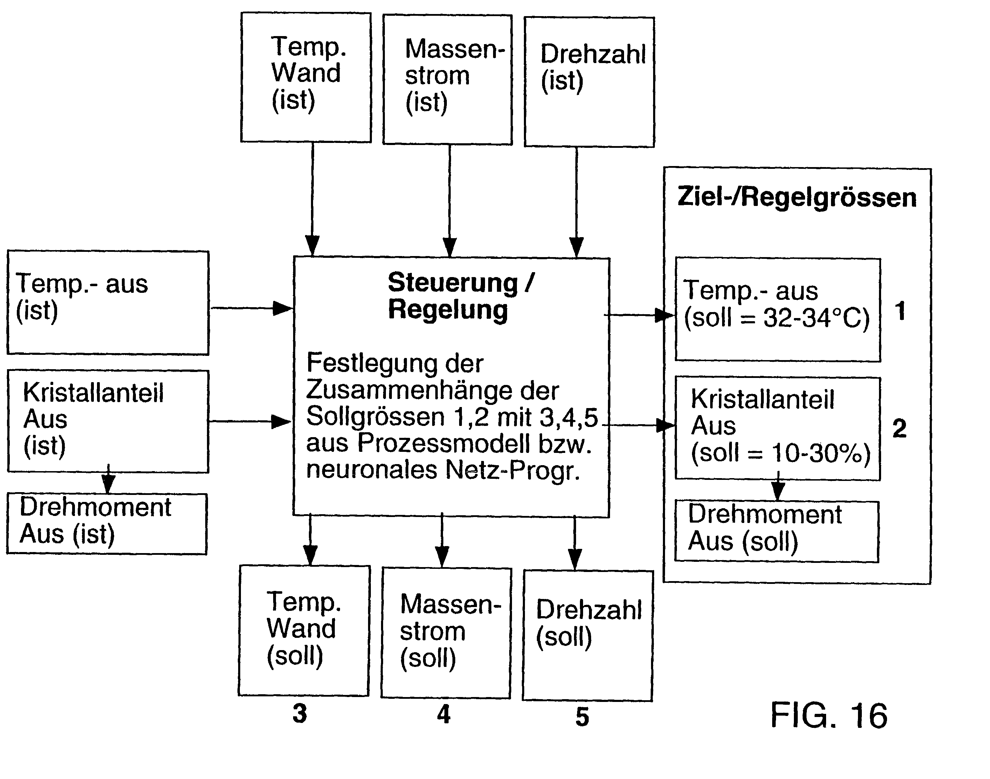

In Fig. 16 ist der prinzipielle Aufbau der Steuerung/Regelung für die Erzeugung von Impfkristallsuspensionen mit definiertem Impfkristallgehalt bei bestimmter Austrittstemperatur dargestellt. Eine Erfassung des Impfkristallgehaltes erfolgt indirekt über das an der Schermodulwelle gemessene Drehmoment. Dieses steigt mit dem Kristallgehalt der Suspension und der einhergehenden Viskositätserhöhung ebenfalls an. Eine Erhöhung des Kristallgehaltes kann über eine Erniedrigung der Wandtemperatur und eine verlängerte Verweilzeit (= reduzierter Massenstrom) erreicht werden. Eine Drehzahlerhöhung beschleunigt die Kristallbildungskinetik bis zu einer optimalen Drehzahl. Eine weitere Drehzahlerhöhung bewirkt aufgrund verstärkter Energiedissipation eine Temperaturerhöhung und einhergehend ein teilweises Abschmelzen von Kristallen. Die optimale Drehzahl hängt damit von der Wandtemperatur ab. Kristallkeimgrößen stellen sich bei den beschriebenen Optimalbedingungen (vgl. Fig. 13, 14) auf ca. ≤ 10 Mikrometer ein. Der komplexe Zusammenhang der Größen: Wandtemperatur, Drehzahl und Verweilzeit (bzw. Massenstrom) mit den Ziel-/Regelgrößen Austrittstemperatur und Kristallgehalt kann aus den gesammelten Versuchsdaten in Form approximativer Zusammenhänge mittels Näherungsgleichungen beschrieben werden, welche dann als Steuer-/Regelalgorithmus implementiert werden. Eine elegantere Methode stellt der Einsatz von neuronale Netze Programmen dar, welche auch nicht lineare Zusammenhänge zwischen den genannten Größen "erlernen° und beschreiben lassen. Nach dem "eriernten" Muster wird dann die Steuerung/Regelung realisiert.

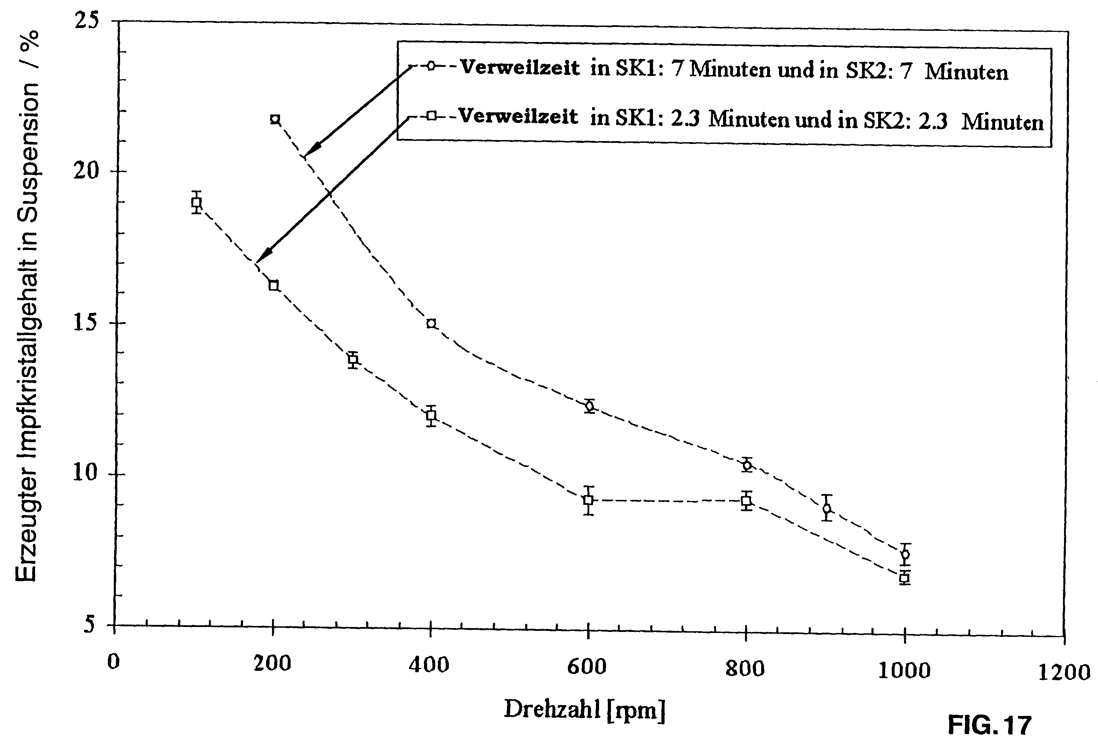

Fig. 17 zeigt als Funktion der Drehzahl einstellbare erzeugte Kristallgehalte zwischen ca. 5 und 22 % in der Impfkristallsuspension auf (hier unter Einsatz eines zweistufigen Schermoduls mit wandschabenden Einbauten mit folgenden Einstellgrößen: Stufe I: n = 900 rpm, Kühlwassertemperatur = 10° C, Stufe II: Drehzahl wurde variiert Kühlwassertemperatur = 30° C (Verweilzeiten vgl. Fig. 17).

### Bezugszeichenliste

- 1: Vorlagebehälter mit Kakaobutterkristallsuspension (32° - 33° C)
- 2: Vorlagebehälter mit Schokoladenmasse (50° C)
- 3: Mischer, statischer
- 4: Wärmetauscher
- 5: Dosierpumpe
- 6: Prozeßpumpe
- 7: Umwälzthermostate
- 8: Scher-/Dehnmodul, Scher-/Dehnströmungsmodul
- 9: Suspensionsrückführung
- 10: thermische Konditionierung, mehrstufige
- 11: Kaltsprühturm (-40° - 0° C)
- 12: Kakaobuttertank (50° - 60° C)
- 13: 3-Wege-Hahn
- 14: Drehmomentmeßvorrichtung
- 15: Regeleinheit für Schermodul 8
- 16: Einbauelement als Scherelement, flügelförmiges
- 17: " " " , "
- 18: " " " , "
- 19: " " " , "
- 20: Kantenbereich, verjüngter
- 21: " , "
- 22: Zylindermantelfläche, innere
- 23: Behälter, motorangetrieben, Wellenkörper
- 24: Kantenbereich, verjüngter
- 25: " , "
- 26: Peripherie des Behälters 23
- 27: Lagerelement
- 28: "
- 29: "
- 30: "
- M: Motoren
- SK1: Scher-/Dehnmodul 1
- SK2: Scher-/Dehnmodul 2
- t: Zeit in Minuten
- rpm: Drehzahl pro Minute
- °C: Grad Celsius
- Ra: Radius der Zylindermantelfläche
- Ri_{II}: Innenzylinderradius (Schermodul Stufe II)
- Ri_{I}: Innenzylinderradius (Schermodul Stufe I)
- βᵥ: Kristallmodifikationsform mit Schmelzbereich ca. 28° - 32°C
- β_{VI}: Kristallmodifikationsform mit Schmelzbereich ca. 34° - 39°C
- Pas: Pascal · Sekunde = Maß für dynamische Viskosität
- mJ/(s mg): spezifischer Wärmestrom (Millijoule pro Sekunde und Milligramm)

## Patentansprüche

1. Verfahren zur Herstellung von Fettschmelze basierten lmpfkristallsuspensionen, insbesondere zur Erzeugung stabiler mikrodisperser Kakaobutterkristallsuspensionen, mit hohem β_{VI}-Modifikationsanteil, und deren Einsatz bei der Impfkristallisation von fettbasierten disperse Feststoffpartikel enthaltenden Suspensionen wie Schokolade, schokoladeähnlichen Massen oder dergleichen, mit einstellbaren: Gesamtkristallgehalt (I), Anteil an hochschmelzender β_{VI}-Kristallmodifikation (II) sowie mittlerer Kristallgröße (III), wobei kaltgesprühte Fettpulver einer stufenweisen thermischen Konditionierung derart unterzogen werden, daß ohne Verklumpung der Pulverteilchen eine Modifikationsumwandlung des polymorphen Fettsystems soweit voranschreitet, daß die thermisch hochstabile β_{VI}-Kristallmodifikation zu einem Anteil von ≥ 10 Prozent ausgebildet wird, das derart konditionierte Fettpulver zu ≥ 1 Prozent in einer kristallfreien auf etwa 1° - 2° C unterhalb der Schmelzenthalpiepeak-Minimaltemperatur der β_{VI}-Kristallmodifikation temperierten Fettschmelze suspendiert wird, und diese Fettpulversuspension unter definierter Abstimmung von mechanischen und thermischen Bedingungen sowie der Verweilzeit in einer Scher-/Dehnströmung behandelt wird bis zur Erreichung der einzustellenden Charakteristika: Gesamtkristallgehalt, β_{VI}-Modifikationsanteil und mittlerer Kristallgröße, und die somit erzeugte Impfkristallsuspension in den Produktstrom einer vorzukristallisierenden Schokolade oder schokoladeähnlichen Masse mit Impfkristallanteilen zwischen 0,01 und 0,2 Prozent (bezogen auf Gesamtmasse) gleichmäßig zudosiert und danach im Produktstrom schonend, homogen und kontinuierlich vermischt wird.

2. Verfahren nach Anspruch 1, **dadurch gekennzeichnet, daß** zur Herstellung der kaltgesprühten Pulver das Versprühen einer Kakaobutterschmelze in einen tiefgekühlten Raum (Sprühturm) derart erfolgt, daß die mit bestimmter Tropfengrößenverteilung von 1 bis 200 Mikrometern feinstzerstäubt erzeugten Schmelzetröpfchen zu einem Kaltgasstrom, in welchem sie eingesprüht werden, relativ bewegt und mittels definierter Einstellung der Temperaturen des Kaltgases (-40 bis 0° C) und der eingesprühten Kakaobutterschmelze (+40° bis +60° C) sowie einer auf die Tropfengrößenverteilung abgestimmten Kaltgasgeschwindigkeit (0,1 - 1 m/s) definiert kristallisiert und anschließend bei Kaltgastemperatur ausgetragen werden.

3. Verfahren nach Anspruch 1, **dadurch gekennzeichnet, daß** die zur Ausbildung/Erhöhung des β_{VI} Anteils in den bei -40° C bis 0° C kaltgesprühten Kakaobutterpulvern vorgenommene thermische Konditionierung der Pulver mehrstufig, bevorzugt zweistufig derart erfolgt, daß die möglichst schnelle Modifikationsumwandlung von instabilen zu hochstabilen Kristallmodifikationen ohne Verklumpung der Fettpulverpartikel, bei deren Lagerung als Pulverschüttung gewährleistet ist, was beispielsweise bei der zweistufigen Kombination mit 12° C für > zwei Tage (I Stufe) und danach bei 25° C für > 30 Tage (II Stufe) realisiert wird.

4. Verfahren nach Anspruch 1, **dadurch gekennzeichnet, daß** im Falle eines reinen Kakaobuttersystems die Suspendierung von ≥ 1 Prozent des konditionierten Sprühfettpulvers in einer weitgehend kristallfreien unterkühlten Fettschmelze bei einer Temperatur von 26 - 32,5° C vorgenommen wird.

5. Verfahren nach Anspruch 1, **dadurch gekennzeichnet, daß** die thermisch/mechanische Behandlung der Sprühfettpulversuspension in einem Scher-/Dehnströmungsfeld räumlich homogen unter Einstellung der wirksamen Schubspannungen bzw. Schergeschwindigkeiten und Temperaturen ein- oder mehrstufig erfolgt und durch teilweises Abschmelzen niedriger schmelzender Kristallmodifikationen und die mechanische Dispergierung/Zerkleinerung der Kristalle eine Reduktion der mittleren Kristallgröße von ca. 100 (Sprühfettpulver) auf < 10 Mikrometer (µm) stattfindet und ein stationärer Zustand mit einem Kristallgehalt in der Suspension von 5 bis 35 Volumenprozenten Kristallanteil einstellbar ist.

6. Verfahren nach den Ansprüchen 1 und 5, **dadurch gekennzeichnet, daß** bei Herstellung einer Impfkeimkristallsuspension, ausgehend von kaltgesprühten und thermisch konditionierten Kakaobutterpartikeln, diese einen Anteil von ≥ 10 Prozent an höchststabilen β_{VI}-Kristallmodifikationen aufweisen, welcher anschließend unter erhöhtem mechanischen Energieeintrag in der Fettpulver/Fettschmelze-Suspension bei etwa 32° bis 34° C auf ≥ 95 Prozent erhöht wird.

7. Verfahren nach den Ansprüchen 1 und 6, **dadurch gekennzeichnet, daß** einem Rest der vorher erzeugten Impfkristallsuspension flüssige Kakaobutter zugesetzt wird, welche unter konstant gehaltenen Temperier- und Rührbedingungen innerhalb einer Zeit von kleiner 60 Minuten zur Herstellung neuer Impfsuspension verwendet wird.

8. Verfahren nach den Ansprüchen 1 und 5, **dadurch gekennzeichnet, daß** in einer besonderen Ausführungsform des erfindungsgemäßen Verfahrens auf den Einsatz von kaltgesprühtem Kakaobutter(Fett-)pulver als Kristallisationspromotoren ganz verzichtet wird und der gesamte Impfkristallgehalt in der Impfkristallsuspension direkt im mechanisch-/thermischen Behandlungsschritt in einem Scher-/Dehnströmungsfeld erzeugt wird, wobei die Wandtemperatur auf 10 bis 25° C abgesenkt, die Verweilzeit auf > 150 s erhöht und an der Wand gebildete Fettkristalle kontinuierlich abgeschabt und mit der Fettschmelze vermischt werden.

9. Verfahren nach den Ansprüchen 1 bis 8, **dadurch gekennzeichnet, daß** der vorgekühlte Produktstrom bei einer Temperatur zwischen 32° und 35° C mit der Kristallsuspension beimpft wird.

10. Verfahren nach einem der vorherstehenden Ansprüche, **dadurch gekennzeichnet, daß** die Impfung kontinuierlich durch Eindosieren und schonendes, mikrohomogenes Vermischen derart vorgenommen wird, daß ein teilweises Aufschmelzen der Impfkristalle im Produktstrom z. B. durch erhöhte lokale Energiedissipation vermieden wird.

11. Verfahren nach einem der vorherstehenden Ansprüche, **dadurch gekennzeichnet, daß** die Impfkristallsuspension mit Mengenanteilen von 0,01 bis 0,2 % Impfkristalle, bezogen auf die Gesamtmasse des Produktes, dem Produktstrom kontinuierlich zugeführt wird.

12. Verfahren nach einem der vorherstehenden Ansprüche, **dadurch gekennzeichnet, daß** anstelle des Kakaobutterfett basierten Schokoladensystems, Suspensionen mit anderen Fetten als kontinuierliche Phase in vergleichbarer Weise angeimpft werden, wobei die einzusetzenden Fettkristallkeime fettsystemspezifisch geeignete höherschmelzende Triglyceridmischungen darstellen.

13. Vorrichtung bestehend aus einem Kaltsprühturm (11), einer Temperierkammer, einem Suspensions-Rührbehälter, einem Scher-/Dehnströmungsmodul, einer Pumpe und einem statischen Mischer (3) zur Durchführung des Verfahrens nach den Ansprüchen 1 bis 12, wobei im Kaltsprühturm (11) das Kaltsprühen der Kakaobutterfettschmelze bzw. einem Gemisch aus Kakaobutter und anderen Fetten erfindungsgemäß in einem Kaltgasstrom vorgenommen werden kann, welcher auf eine Temperatur von 10° - 50° C unterhalb der Kristallisationstemperatur der am niedrigsten schmelzenden Fettkomponente des gesprühten Fettsystems einstellbar ist und mittels Einstoffdüse bei Sprühdrucken von 1 - 500 bar Überdruck Fettsprühteilchen mit Durchmessern ≤ 50 - 500 Mikrometern (µm) erzeugt werden können, welche im Anschluß in die Temperierkammer überführt werden, wo in einer zwei- oder mehrstufigen thermischen Konditionierung (10) bei einstellbaren Temperatur-Zeit-Verläufen mit Plateautemperaturen von bevorzugt -10 und +25 bzw. +28° C die kontrollierte Modifikationsumwandlung (Ausbildung von ≥ 10 - 50 % β_{VI}-Anteil) ohne Verklumpung der Sprühpulverteilchen stattfindet, und anschließend die derart konditionierten Pulver in einem auf ca. 26 - 32.5° C temperierten Rühr-/Mischbehälter, welcher mit schonend bei kleinen Drehzahlen homogen mischenden Rührelementen bestückt ist, in einer auf bis ca. 26 - 32,5° C unterkühlten Kakaobutterfett- bzw. Fettgemischschmelze suspendiert werden sowie im Anschluß diese Sprühpulver-Fettkristallsuspension in einem kontinuierlich axial durchströmten Scher-/Dehnströmungsmodul (8), erfindungsgemäß bevorzugt bestehend aus einem konzentrischen oder exzentrischen Zylinderscherspalt, welcher ≤ 5 mm Spaltweite besitzt, bei gleichzeitiger auf 5 - 30° C Wandtemperatur einstellbarer Kühlung der Scherspaltaußenwand unter Einstellung der axialen Durchströmungsgeschwindigkeit des Scherspaltes auf ≤ 1 cm/s und Rotation des Innenzylinders mit Umfangsgeschwindigkeiten von 0,2 bis 2 m/s derart geschert wird, daß die Austrittstemperatur der Kristallsuspension aus dem Scherspalt auf Grund überlagerter viskoser Energiedissipation durch Scherung und Wärmeabfuhr zwischen 32° und 34,5° C auf 0,5° C genau einstellbar ist und gleichzeitig eine Feindispergierung der Kristalle auf mittlere Durchmesser von ≤ 10 - 20 Mikrometer (µm) (von ca. 50 - 500 µm Ausgangsgröße) erfolgt sowie ferner abhängig von Scherung, Wandtemperatur und Verweilzeit im Scherspalt die austretende Kristallsuspension auf Kristallgehalte von 5 - 35 %, kontrollier- und regelbar über das auf den rotierenden Innenzylinder übertragene Drehmoment, eingestellt werden kann, und danach diese Impfkristallsuspension mit einer mechanisch schonend arbeitenden Dosierpumpe (5) dem auf 32° - 34,5° C temperierten Produktstrom einer Schokolade oder schokoladeähnlichen Masse kontinuierlich in kleinen Mengen von ≤ 1 % Kristallkeimsuspension pro kg Produkt zudosiert und in diesem mittels eines statischen Mischers (3) schonend und homogen eingemischt wird.

14. Vorrichtung nach Anspruch 13, **dadurch gekennzeichnet, daß** der temperierte Konditionierraum mit rotierenden oder vibrierenden Einbauten (16) bestückt ist, um eine permanente Bewegung der Pulver, erzeugt durch Rotation bzw. Vibration der eingebauten Elemente oder der Mischkammer selbst zu realisieren und damit eine beschleunigte thermische Konditionierung der Sprühpulver bei erhöhten Temperaturen (bis 28° C bei der Erzeugung der β_{VI}-Kristallmodifikation) unter Vermeidung von Klumpenbildung bevorzugt zu ermöglichen.

15. Vorrichtung nach Anspruch 13, **dadurch gekennzeichnet, daß** das Scher-/Dehnströmungsmodul (8) zur Behandlung der Sprühpulversuspensionen mit dem Innenzylinder mitrotierende Einbauten besitzt, welche entweder wandschabend an der Innenwand des gekühlten Außenzylinders angeordnet sind und/oder verengte Spalte zwischen Innen- und Außenzylinderwand oder zusätzlich in den Einbauten selbst ausbilden, in welchen eine lokale Beschleunigung der Strömung erfolgt und damit Dehnströmungseffekte wirksam werden, womit erfindungsgemäß eine verbesserte Feindispergierung durch alternierendes Ausstreichen (=Dehnen + Scheren) und Abschaben der Fettkristalle bzw. Fettkristallagglomerate an bzw. von der gekühlten Wand erreicht wird.

16. Vorrichtung nach Anspruch 13, **dadurch gekennzeichnet, daß** das Scher-/Dehnströmungsmodul (8) in eine Bypassleitung zu einem Rührbehälter integriert ist, so daß die feindispergierte, im Schermodul (8) behandelte Kristallsuspension in diesem Rührbehälter rückvermischbar wird mit noch nicht mechanisch behandelter Suspension und nach einigen Passagen des Rührbehälterinhaltes durch das Schermodul (8) über einen integrierten 3-Wege-Hahn (13) ein Umschalten des Kreislaufbetriebes auf Zudosierung in die Produktleitung ermöglicht wird.

17. Vorrichtung nach Anspruch 13, **dadurch gekennzeichnet, daß** dem Schermodul (8) eine Dosierpumpe (5) vorangeschaltet ist, welche die axiale Durchströmungsgeschwindigkeit des Schermoduls (8) entsprechend der Scherspaltweite dem Dosiermassenstrom und der Kristallkonzentration in der Impfkristallsuspension entsprechend einer Zudosierung von 0,01 bis 0.2 % Kristallanteil zum Produktstrom einstellen läßt und entweder nach einmaligem Direktdurchlauf der Kristallsuspension durch das Schermodul (8) diese in den Produktstrom eindosiert oder aus dem Rührbehälter, in welchem im Schermodul (8) mehrfach behandelte Kristallsuspension rückvermischt wird, diese Suspension in den Produktstrom dosiert.

18. Vorrichtung nach den Ansprüchen 13 und 15 bis 17, **dadurch gekennzeichnet, daß** das Schermodul (8), axial in zwei Zonen geteilt ist, und die erste Zone eine Kühlzone darstellt, die mit Wasser einer Temperatur von ca. 10 bis 15° C gekühlt wird und damit eine starke Kristallbildung (Gemisch von β_{IV}-, β_{V}- und β_{VI}-Modifikationen) in der Kakaobutterfettschmelze hervorruft, und wobei die zweite Zone mit Kühlwasser einer höheren Temperatur von 25 - 30° C temperiert wird, um die instabilen β_{VI}-Kakaobutterkristalle aufzuschmelzen, den β_{VI}-Modifikationsanteil zu erhöhen und die Viskosität einzustellen, wobei dann die erzeugte Kakaobutterkristallsuspension mit 10 bis 30 % Kristallanteil mit Anteilen von 0 - 50 % β_{V}- und 50 bis 100 % β_{VI}-Kristallmodifikation mittels Dosierpumpe (5) direkt in den Produktstrom einer vorzukristallisierenden Schokolade oder schokoladeähnlichen Masse mit Impfkristallanteilen zwischen 0.01 und 0,2 % (bezogen auf Gesamtmasse) gleichmäßig zudosiert und danach im Produktstrom schonend, homogen, kontinuierlich vermischt wird.

19. Vorrichtung nach Anspruch 18, **dadurch gekennzeichnet, daß** der Scherspalt zwischen der Außenwand des rotierenden Innenzylinders und der Innenwand des temperierten Außenzylinders in der ersten Kühlstufe klein ist (Ri/Ra ≥ 0,8), und in der zweiten Kühlstufe groß ist (Ri/Ra ≤ 0,8), so daß die in der ersten Kühlstufe bei starker Kühlung gebildeten instabilen Kristalle aufgrund starker Scherung (Scherspannungen: 1000 - 2000 Pa) schnell zu stabilen β_{V}- und β_{VI}-Kristallen umgewandelt werden, und in der zweiten Kühlstufe die Scherung durch die Vergrößerung des Scherspaltes reduziert ist, um eine zusätzliche lokale Erwärmung der mit Kristallen angereicherten Kristallsuspension durch viskose Energiedissipation hinreichend klein zu halten.

20. Vorrichtung nach Anspruch 13, **dadurch gekennzeichnet, daß** über eine Steuer-/Regeleinheit für das Schermodul (8) eine Abstimmung der Drehzahl (Stellgröße 1) des Innenzylinders (gegebenenfalls mit Einbauten), der Wandkühltemperatur (Stellgröße 2) des Außenzylinders und dem Massendurchsatz (Stellgröße 3) bzw. der Verweilzeit im Reaktionsraum des Schermoduls (8), letztere eingestellt über die Drehzahl der Dosierpumpe (5) derart erfolgt, daß sich die Austrittstemperatur der Suspension (Ziel-/Regelgröße 1) im Falle von Kakaobutter zwischen 30 und 34,5° C mit einer Genauigkeit von +/-0,25° C und der Kristallgehalt der Suspension (Ziel-/Regelgröße 2) zwischen 10 und 30 % (+/- 1 %) einstellen lassen, wobei durch die über Spaltgeometrie und Drehzahl bestimmte Scherung/Dehnung der Kristallsuspension Impfkristallgrößen von ≤ 10 - 20 Mikrometer (µm) entstehen lassen.

21. Vorrichtung nach Anspruch 19, **dadurch gekennzeichnet, daß** der Steuer-/Regeleinheit zusätzlich ein an der Welle des Schermoduls (8) gemessenes Drehmoment-Meßsignal zugeführt wird, welches unter gegebenen Einstellungen für Drehzahl, Massenstrom und Wandkühltemperatur eine direkte Korrelation mit der erzeugten Impfkristallkonzentration zuläßt und damit eine Kontrolle oder Steuerung der Austrittskristallkonzentration realisieren läßt.

22. Vorrichtung nach Anspruch 13, **dadurch gekennzeichnet, daß** der in den Produktstrom des anzuimpfenden Produktes (Schokoladenprodukt) zu integrierende statische Mischer (3) hinreichend große Durchströmungsspalte besitzt, in welchen bei für Schokoladenprodukte relevanten Viskositäten (von ca. 0.1 - 5 Pas) und vorgegebenen Massenströmen, die lokale viskose Energiedissipation hinreichend klein bleibt, um eine lokale Erwärmung des Produktes auf Temperaturen größer 34,5° C (bei reinen β_{VI}-Kakaobutter Kristallkeimen) zu vermeiden, und eine erhöhte Anzahl von ≥ 10 bis 12 statischen Mischelementen in Serie geschaltet werden, um eine Mischgüte von 95 % zu gewährleisten.

## Claims

1. A method of producing seed crystal suspensions based on melted fat, particularly for the production of stable microdisperse cocoa butter crystal suspensions with a high β_{VI} i modification proportion and their use in the seed crystallization of suspensions containing disperse solids particles such as chocolate, chocolate-like masses or the like, with an adjustable: total crystal content (I), proportion of high melting β_{VI} crystal modification (II) as well as medium crystal size (III), with cold-sprayed fatty powders being subjected to a gradual thermal conditioning in such a way that a modification transformation of the polymorphic fat system without lump formation of the powder particles progresses thus far that the thermally highly stable β_{VI} crystal modification is formed to a proportion of ≥ 10 per cent, the fatty powder conditioned in this way is suspended by ≥ 1 percent in a crystal-free fat melt tempered to appr. 1 - 2 Degrees C below the minimum melt enthalpy peak temperature of the β_{VI} crystal modification and this fatty powder suspension is treated under defined coordination of mechanical and thermal conditions until reaching the characteristics to be adjusted: total crystal content, β_{VI} modification proportion and medium crystal size, and the seed crystal suspension thus produced is uniformly proportioned into the product stream of a chocolate or chocolate-like mass to be pre-crystallized with seed crystal proportions between 0.01 and 0.2 per cent (related to total mass) and is then carefully, homogenously and continuously mixed in the product stream.

2. A method as claimed in Claim 1, **characterized in that**, for the production of the cold-sprayed powders, the spraying of a cocoa butter melt is effected in a deep-freeze room (spray tower) in such a way that the melt droplets produced in superatomized fashion with a certain drop size distribution of 1 to 200 micrometres are moved relative to a cold-gas stream into which they are sprayed and are crystallized in defined fashion by means of defined adjustment of the temperatures of the cold gas (-40 to +60 Degrees C) and at a cold-gas velocity (0.1 to 1 m/s) coordinated with the drop size distribution and subsequently discharged at cold-gas temperature.

3. A method as claimed in Claim 1, **characterized in that** the thermal conditioning of the powders carried out for the formation/increase of the β_{VI} proportion in the cocoa butter powders cold-sprayed at -40 Degrees C to 0 Degree C is effected in several stages, preferably in two stages in such a way that the, preferably, rapid modification transformation from unstable into highly stable crystal modifications without lump formation of the fatty powder particles when stored as powder fill is ensured which, for instance, is realized with the two-stage combination at 12 Degrees C for > 2 days (Stage I) and subsequently at 25 Degrees C for > 30 days (Stage II).

4. A method as claimed in Claim 1, **characterized in that**, in case of a pure cocoa butter system, the suspension of ≥ 1 % of the conditioned fatty spray powder is effected in a largely crystal-free, supercooled fat melt at a temperature of 26 - 32.5 Degrees C.

5. A method as claimed in Claim 1, **characterized in that** the thermal/ mechanical treatment of the fatty spray powder suspension is effected homogenously in space in one or several stages in a shearing/ dilatation field of flow with adjustment of the effective shear stresses and/or shearing speeds and temperatures, and that a reduction of the medium crystal size from appr. 100 (fatty spray powder) to < 10 micrometres (µm) takes place by partial melting-away of lower-melting crystal modifications and the mechanical dispersion/ size reduction of the crystals and that a steady state with a crystal content in the suspension of 5 to 35 per cent by volume crystal proportion is adjustable.

6. A method as claimed in Claims 1 and 5, **characterized in that**, in the production of a seed nucleus crystal suspension, starting from cold-sprayed and thermally conditioned cocoa butter particles, these have a proportion of ≥ 10 per cent of superstable β_{VI} crystal modification which is subsequently increased under an increased mechanical energy input in the fatty powder/fat melt suspension at appr. 32 to 34 Degrees C to ≥ 95 per cent.

7. A method as claimed in Claims 1 and 6, **characterized in that** liquefied cocoa butter is added to a rest of the previously produced seed crystal suspension which will be used under tempering and stirring conditions kept constant within a period of less than 60 minutes for the production of a new seed suspension.

8. A method as claimed in Claims 1 and 5, **characterized in that** in a particular embodiment of the method according to the invention the use of cold-sprayed cocoa butter (fat) powder as crystallization promoters is waived entirely, and that the entire seed crystal content in the seed crystal suspension is produced directly in the mechanical/thermal treatment step in a shearing/dilatation field of flow, with the wall temperature being lowered to 10 to 25 Degrees C, the retention time being increased to > 150 s, and fatty crystals formed on the wall being continuously scraped off and mixed with the fat melt.

9. A method as claimed in Claims 1 to 8, **characterized in that** the pre-cooled product stream is inoculated with the crystal suspension at a temperature between 32 and 35 Degrees C.

10. A method as claimed in any of the preceding claims, **characterized in that** the inoculation is effected continuously by proportioning and careful, micro-homogenous mixing in such a way that partial melting-on of the seed crystals in the product stream is avoided, e.g. by increased local energy dissipation.

11. A method as claimed in any of the preceding claims, **characterized in that** the seed crystal suspension is supplied continuously to the product stream with quantitative proportions of 0.01 t 0.2 % seed crystals, related to the total mass of the product.

12. A method as claimed in any of the preceding claims, **characterized in that**, instead of the chocolate system based on cocoa butter fat, suspensions with other fats are inoculated in a comparable manner as a continuous phase, with the fatty crystal nuclei to be used representing fat-system specific, suitable, higher melting triglyceride mixtures.

13. A device comprising of a cold-spray tower (11), a tempering chamber, a suspension stirrer vessel, a shearing/dilatation flow module, a pump and a static mixer (3) for implementing the method as claimed in Claims 1 to 12, it being possible to carry out the cold spraying of the cocoa butter fat melt and/or a mixture of cocoa butter and other fats in the cold-spray tower (11) according to the invention in a cold-gas stream which is adjustable to a temperature of 10 - 50 Degrees C below the crystallization temperature of the lowest-melting fat component of the sprayed fat system, and in which fat spray particles of ≤ 50 - 500 micrometres (µm) can be produced by means of unary nozzle at spray pressures of 1 - 500 bars overpressure which are subsequently transferred into the tempering chamber where the controlled modification transformation (formation of ≥ 10 - 50 % β_{VI} proportion) without lump formation of the spray powder particles takes place in a two or multistage thermal conditioning (10) at adjustable variations in temperature-time with plateau temperatures of, preferably, -10 to +25 and/or +28 Degrees C, the thus suspended powders being subsequently suspended in a cocoa butter fat and/or fat mixture melt supercooled to appr. 26 - 32.5 Degrees C in a stirrer/mixing vessel set at a temperature of appr. 26 - 32.5 Degrees C equipped with stirring elements which are carefully and homogenously mixing at low speeds, and these spray powder-fatty crystal suspensions being subsequently sheared in a continuous, axially streamed-through shearing/dilatation module (8) which, according to the invention, preferably consists of a concentric and eccentric cylinder gap with a gap width of ≤ 5 mm, with cooling of the shearing-gap outer wall being simultaneously adjustable at 5 - 30 Degrees C wall temperature, adjusting the flow velocity of the axial shearing gap at ≤ 1 cm/s and rotation of the inner cylinder at circumferential speeds of 0.2 to 2 m/s in such a way that the outlet temperature of the crystal suspension from the shearing gap and heat dissipation is adjustable right to 0.5 Degree C between 32 and 34.5 and, at the same time, a fine dispersion of the crystals to mean diameters of ≤ 10 - 20 micrometres (um) (from appr. 50 - 500 um initial size) is taking place as well as furthermore that, as a function of the shearing, wall temperature and retention time in the shearing gap, the emerging crystal suspension can be adjusted to crystal contents of 5 - 35 %, controllable and variable via the torque transmitted to the rotating inner cylinder and that, subsequently, this seed crystal suspension is continuously added by proportioning to the product stream of a chocolate or chocolate-mass set at a temperature of 32 - 34.5 Degrees C in small quantities of ≤ 1 % crystal nucleus suspension per kg of product with a mechanical, carefully operating proportioning pump and is carefully and homogenously mixed into this product by means of a static mixer.

14. A device as claimed in Claim 13, **characterized in that** the tempered conditioning room is equipped with rotating or vibrating fixtures (16) in order to realize a permanent movement of the powders produced by rotation and/or vibration of the fitted elements or the mixing chamber itself and thus, preferably, enabling an accelerated thermal conditioning of the spray powders at increased temperatures (up to 28 Degrees C in the production of the β_{VI} crystal modification), avoiding lump formation.

15. A device as claimed in Claim 13, **characterized In that** the shearing/dilattaion flow module (8) for treatment of the spray powder suspensions is provided with fixtures co-rotating with the inner cylinder, said fixtures being arranged either as wall-scraping fixtures at the interior wall of the cooled outer cylinder and/or forming narrowed gaps between inner and outer cylinder wall or, additionally, in the fixtures proper, in which a local acceleration of the flow takes place thereby causing the dilatation flow effects to become effective and achieving an improved fine dispersion according to the invention by alternating smoothing-out (= dilatating + shearing) and scraping-off of the fatty crystals and/or fatty crystal agglomerates onnd/or from the cooled wall.

16. A device as claimed in Claim 13, **characterized in that** the shearing/dilatation of the flow module (8) is integrated into a bypass line to a stirrer vessel so that the finely dispersed crystal suspension treated in the shearing module (8) becomes re-mixable in this stirrer vessel enabling a changeover of the circulatory operation to proportioning into the product line via an integrated three-way cock (13) after a few passages of the stirrer vessel contents through the shearing module (8).

17. A device as claimed in Claim 13, **characterized in that** a proportioning pump (5) is connected upstream of the shearing module (8) permitting adjustment of the axial flow velocity of the shearing module (8) according to the shearing gap width to the proportioning mass stream and the crystal concentration in the seed crystal suspension according to a proportioning of 0.01 to 0.2 % crystal proportion to the product stream and proportioning this into the product stream either after a single direct passage of the crystal suspension through the shearing module (8), or proportioning this suspension into the product stream from the stirrer vessel in which a repeatedly treated crystal suspension is re-mixed in the shearing module (8).

18. A device as claimed in Claims 13 and 15 to 17, **characterized in that** the shearing module (8) is axially divided into two zones, the first zone representing a cooling zone which is cooled with water at a temperature of appr. 10 to 15 Degrees C thereby causing a strong crystal formation (mixture of β_{IV}, β_{V} and β_{VI} modifications) in the cocoa butter fat melt, and the second zone being tempered with cooling water of a higher temperature of 25 - 30 Degrees C in order to melt on the unstable cocoa butter crystals, to increase the β_{VI} modification proportion and to adjust the viscosity, the cocoa butter crystal suspension produced then being uniformly proportioned with a 10 to 30 % crystal proportion with proportions of 0 - 50 % β_{V} and 50 to 100 % β_{VI} crystal modification by means of the proportioning pump directly into the product stream of a chocolate or chocolate-like mass to be pre-crystallized with seed crystal proportions between 0.01 and 0.2 % (related to the total mass) and subsequently being carefully, homogenously, continuously mixed in the product stream.

19. A device as claimed in Claim 18, **characterized in that** the shearing gap between the exterior wall of the rotating inner cylinder and the interior wall of the tempered outer cylinder in the first cooling stage is small (Ri/Ra ≥ 0.8) and large (Ri/Ra ≤ 0.8) in the second cooling stage so that the unstable crystals formed in the first cooling stage at intense cooling are rapidly transformed into stable β_{V} and β_{VI} crystals due to considerable shearing (shear stresses: 1000 - 2000 Pa) and that shearing is reduced in the second cooling stage due to the enlargement of the shearing gap in order to keep an additional local warming of the crystal suspension enriched with crystals sufficiently low by viscous energy dissipation.

20. A device as claimed in Claim 13, **characterized in that** a coordination of the speed (correcting variable 1) of the inner cylinder (with fixtures, if necessary), of the wall cooling temperature (correcting variable 2) of the outer cylinder and the mass throughput (correcting variable 3)and/or the retention time in the reaction room of the shearing module (8), the latter being adjusted via the speed of the proportioning pump (5), is effected via the control/regulating unit in such a way that, in the case of cocoa butter, the outlet temperature of the suspension (target/controlled variable) can be adjusted between 30 and 34.5 Degrees C with an accuracy of ± 0.25 Degree C and the crystal contents of the suspension (target/controlled variable 2) between 10 and 30 % (± 1 %), the shearing/dilation of the crystal suspension determined by the gap geometry and speed causing seed crystal sizes of ≤ 10 - 200 micrometres (um) to be produced.

21. Device as claimed in Claim 19, **characterized in that** a torque measuring signal measured at the shaft of the shearing module (8) is additionally applied to the control/regulating unit, permitting a direct correlation with the generated seed crystal concentration under given adjustments for speed, mass flow and wall cooling temperature, thereby enabling realization of a control or regulation of the outlet crystal concentration.

22. A device as claimed in Claim 13, **characterized in that** the static mixer (3) to be integrated into the product stream of the product (chocolate product) to be inoculated has sufficiently large flow gaps in which, at viscosities (of appr. 0.1 - 5 Pas) relevant to chocolate products and specified mass flows, the local viscous energy dissipation remains sufficiently small in order to avoid local warming of the product to temperatures in excess of 34.5 Degrees C (with pure βvi cocoa butter crystal nuclei) and where an increased number of ≥ 10 to 12 static mixing elements are connected in series in order to ensure a mixing quality of 95 %.

## Revendications

1. Procédé servant à produire des suspensions de cristaux germes à base de graisse fondue, en particulier à fabriquer des suspensions microdispersées stables de cristaux de beurre de cacao, avec part élevé de modification β_{VI}, et leur emploi lors de la cristallisation germe de suspensions à base de graisse, telles que le chocolat, les pâtes assimilées au chocolat ou similaires contenant des particules solides, avec paramètres suivants réglables : teneur totale en cristaux (I), part de modification de cristaux β_{VI} (II) à point de fusion élevé ainsi que taille cristalline moyenne (III), sachant que des poudres de graisse pulvérisées à froid sont soumises à un conditionnement thermique échelonné tel que, sans que les particules de poudre ne forment de grumeaux, une conversion modificative du système polymorphe gras progresse au point que la modification de cristaux β_{VI} hautement stable à la chaleur se forme jusqu'à représenter une part de ≥ 10 pour cent, que la part de poudre de graisse ainsi formée soit mise en suspension à env. 1 - 2 °C en dessous de la température minimum du pic d'enthalpie de fusion de la modification de cristaux β_{VI}, dans un bain de graisse tempéré sans cristaux, et que cette suspension de poudre de graisse, dans une harmonisation définie des conditions mécaniques et thermiques ainsi que du temps de séjour dans un flux de cisaillement / d'allongement, soit traitée jusqu'à atteindre les caractéristiques à ajuster suivantes: teneur totale en cristaux, part de modification β_{VI} et taille moyenne des cristaux et qu'ainsi la suspension de cristaux germes ainsi fabriqués soit ajoutée uniformément par dosage dans le flux de produit d'un chocolat ou d'une pâte similaire à du chocolat à pré-cristalliser avec des parts de cristaux germes comprises entre 0,01 et 0,2 pour cent (se référant à la masse totale), et soit mélangée avec ménagement, de manière homogène et continuellement dans le flux de produit.

2. Procédé selon la revendication 1, **caractérisé en ce que** pour fabriquer les poudres pulvérisées à froid, la pulvérisation d'un bain de beurre de cacao dans un compartiment surgelé (tour de pulvérisation) a lieu de telle sorte que les gouttes du bain, gouttes générées par brumisation fine et dont les tailles sont réparties de manière précise dans une plage allant de 1 à 200 microns, décrivent un mouvement relatif par rapport à un flux de gaz froid dans lequel elles sont injectées, et qu'au moyen de températures réglées de manière définie pour le gaz froid (entre -40 et 0 °C) et pour le bain injecté de beurre de cacao (entre +40 et +60 °C) et qu'au moyen d'une vitesse du gaz froid (entre 0,1 et 1 m/s) harmonisée avec la répartition des tailles des gouttes, ces gouttes du bain cristallisent de manière définie et qu'ensuite elles soient évacuées à la température du gaz froid.

3. Procédé selon la revendication 1, **caractérisé en ce que** le conditionnement thermique des poudres effectué pour créer / hausser la part β_{VI} dans les poudres de beurre de cacao pulvérisées à froid entre -40 et 0 °C a lieu en plusieurs étapes, de préférence en deux étapes de sorte que soit garantie une conversion modificative la plus rapide possible des modifications de cristaux, passant d'instables à hautement stables sans que les particules de poudre de graisse ne grumellent lors de leur stockage en tant que poudre en vrac, ce qui est réalisé par exemple avec la combinaison de deux étapes : une étape à 12 °C pendant plus de deux jours (étape I) et ensuite une étape à 25 °C pendant plus de 30 jours (étape II).

4. Procédé selon la revendication 1, **caractérisé en ce que** dans le cas d'un système purement au beurre de cacao, la mise en suspension de ≥ 1 pour cent de la poudre de graisse pulvérisée conditionnée a lieu à une température comprise entre 26 et 32,5 °C, dans un bain de graisse surrefroidi largement exempt de cristaux.

5. Procédé selon la revendication 1, **caractérisé en ce que** le traitement thermique / mécanique de la suspension de poudre de graisse pulvérisée a lieu en une ou plusieurs étapes dans un champ de cisaillement / d'allongement de façon homogène dans l'espace, avec réglage des tensions de poussée, des vitesses de cisaillement et des températures efficaces, et que par fusion partielle des modifications de cristaux fondant à basse température ainsi que par dispersion / broyage mécanique des cristaux une réduction de la taille moyenne des cristaux se produit, passant d'env. 100 microns (poudre de graisse pulvérisée) à < 10 microns (µm), et qu'un état stationnaire est ajustable dont la teneur volumique en cristaux dans la suspension est réglable entre 5 et 35 pour cent volumiques

6. Procédé selon les revendications 1 et 5, **caractérisé en ce que** lors de la fabrication d'une suspension de cristaux germes, partant de particules de beurre de cacao pulvérisées à froid et conditionnées à la chaleur, celles-ci présentent une part de ≥ 10 pour cent de modifications de cristaux β_{VI}, cette part étant ensuite portée à ≥ 95 pour cent sous apport accrû d'énergie mécanique dans la poudre de graisse / suspension de bain de graisse à une température comprise entre 32 et 34 °C env.

7. Procédé selon les revendications 1 et 6, **caractérisé en ce qu**'à un reste de la suspension de cristaux d'inoculation précédemment fabriquée est ajouté du beurre de cacao liquide, lequel sert, dans des conditions de maintien en température et de malaxage maintenues constantes sur une période inférieure à 60 minutes, à fabriquer une nouvelle suspension d'inoculation.

8. Procédé selon les revendications 1 à 5, **caractérisé en ce que** dans une forme particulière d'exécution du procédé inventif, on renonce complètement à l'emploi d'une poudre (de graisse) de beurre de cacao pulvérisée à froid servant de promotrice de la cristallisation, et que la teneur intégrale en cristaux d'inoculation dans la suspension de cristaux d'inoculation est générée directement au cours d'une étape de traitement mécanique / thermique dans un champ à flux de cisaillement / d'allongement, sachant que la température des parois est ramenée à un niveau compris entre 10 et 25 °C, le temps de séjour porté à > 150 s et que les cristaux de graisse formés contre la paroi sont continuellement raclés et mélangés au bain de graisse.

9. Procédé selon les revendications 1 à 8, **caractérisé en ce que** l'on inocule avec la suspension de cristaux le flux de produit, pré-refroidi, à une température comprise entre 32 et 35 °C.

10. Procédé selon l'une des revendications précédentes, **caractérisé en ce que** l'inoculation a lieu continuellement, par dosage pénétrant et mélange micro-homogène, avec ménagement, de sorte à éviter une fusion partielle des cristaux d'inoculation dans le flux de produit, par ex. en raison d'une dissipation locale accrue de l'énergie.

11. Procédé selon l'une des revendications précédentes, **caractérisé en ce que** la suspension de cristaux d'inoculation est ajoutée continuellement dans le flux de produit, à raison de parts quantitatives de cristaux d'inoculation comprises entre 0,01 et 0,2 % de la masse totale du produit.

12. Procédé selon l'une des revendications précédentes, **caractérisé en ce que** à la place du système de chocolat basé sur de la graisse de beurre de cacao, on inocule de manière comparable des suspensions avec d'autres graisse en tant que phase continue, sachant que les germes de cristaux gras à employer représentent, spécifiquement dans le système gras, des mélanges de triglycérides appropriés à point de fusion plus élevé.

13. Dispositif comprenant une tour de pulvérisation à froid (11), une chambre de maintien en température, un réservoir agitateur de la suspension, un module à flux de cisaillement / d'allongement, un pompe et un mélangeur statique (3), et servant à réaliser le procédé selon les revendications 1 à 12, sachant que dans la tour de pulvérisation à froid (11) la pulvérisation à froid du bain de graisse de beurre de cacao et/ou d'un mélange de beurre de cacao et d'autres graisses peut s'effectuer, conformément à l'invention, dans un flux de gaz froid, flux réglable à une température située entre 10 et 50 °C en dessous de la température de cristallisation du composant gras ayant le point de fusion le plus bas dans le système gras pulvérisé, et qu'il est possible de fabriquer des particules pulvérisées de graisse, d'un diamètre compris entre ≤ 50 et 500 microns (µm) au moyen d'une buse mono-matière sous des pressions de pulvérisation comprises entre 1 et 500 bars de surpression, lesdites particules étant ensuite transférées dans la chambre de maintien en température où, au moyen d'un conditionnement thermique (10) en une ou deux étapes comprenant des courbes température / temps réglables avec des températures plateaux comprises de préférence entre -10 et +25 °C et/ou +28 °C, la conversion modificative contrôlée (formation de ≥ 10 - 50 % de la part β_{VI}) a lieu sans que les particules de poudre pulvérisée ne grumellent, et qu'ensuite les poudres conditionnées de la sorte sont mises en suspension, dans un bain de graisse de beurre de cacao et/ou de mélange gras surrefroidi jusqu'à une température comprise entre env. 26 et 32,5 °C, dans un réservoir agitateur / mélangeur à une température comprise entre env. 26 et 32,5 °C, ledit réservoir étant équipé d'éléments agitateurs tournant à vitesse réduite, mélangeant de façon homogène et avec ménagement, et qu'ensuite cette suspension de poudre pulvérisée et de cristaux gras est cisaillée dans un module de cisaillement / allongement (8) traversé en permanence par un flux axial, ledit module se composant de préférence d'une fente de cisaillement concentrique ou excentrique du cylindre, laquelle fente présente un interstice ≤ 5 mm, la réfrigération de la paroi extérieure de la fente de cisaillement étant simultanément réglable sur une température comprise entre 5 et 30 °C, avec réglage sur ≤ 1 cm/s de la vitesse de traversée axiale de la fente de cisaillement, et rotation du cylindre intérieur à des vitesses circonférentielles comprises entre 0,2 et 2 m/s, de telle sorte que la température de la suspension de cristaux sortant de la fente de cisaillement est réglable avec précision à 0,5 °C près entre 32° et 34,5 °C en raison d'une dissipation superposée de l'énergie visqueuse par le cisaillement et l'évacuation de chaleur, et que simultanément a lieu une dispersion fine des cristaux dans la plage des diamètres moyens comprise entre ≤ 10 et 20 microns (µm) (plage d'origine comprise entre 50 et 500 microns) et qu'en outre il est possible de régler entre 5 et 35 %, en fonction du cisaillement, de la température de paroi et du temps de séjour dans la fente de cisaillement, la teneur en cristaux de la suspension cristalline sortante, réglage possible de façon contrôlée par le biais du couple communiqué au cylindre intérieur en rotation, et qu'ensuite cette suspension de cristaux d'inoculation est ajoutée continuellement, en petites quantités de ≤ 1 % de suspension de cristaux d'inoculation par kg de produit au moyen d'une pompe de dosage (5) mécanique le ménageant, au flux maintenu à une température comprise entre 32 et 34,5 °C d'un chocolat ou d'une pâte assimilable à du chocolat, un mélangeur statique (3) mélangeant la suspension de cristaux d'inoculation avec ménagement et de manière homogène dans ledit produit.

14. Dispositif selon la revendication 13, **caractérisé en ce que** le compartiment de conditionnement maintenu en température est équipé d'éléments incorporés tournants ou vibrants (16) pour réaliser un mouvement permanent des poudres, mouvement engendré par la rotation et/ou la vibration des éléments incorporés ou de la chambre mélangeuse elle-même, et pour, de préférence, permettre ainsi à des températures accrues (jusqu'à 28 °C lors de la génération de la modification de cristaux β_{VI}) un conditionnement thermique accéléré des poudres pulvérisées tout en évitant la formation de grumeaux.

15. Dispositif selon la revendication 13, **caractérisé en ce que** le module à flux de cisaillement / allongement (8) servant à traiter les suspensions de poudre pulvérisée avec le cylindre intérieur comporte des éléments incorporés rotatifs eux aussi, qui sont disposés contre la paroi intérieure du cylindre extérieur refroidi pour refroidir cette paroi et/ou qui forment eux-mêmes des interstices rétrécis entre la paroi intérieure et la paroi extérieure du cylindre ou en plus dans les éléments incorporés eux-mêmes, fentes dans lesquelles une accélération locale du flux a lieu, donc dans lesquelles les effets du flux d'allongement s'activent, ce qui permet d'obtenir, conformément à l'invention, une dispersion fine améliorée par enduction alternée (= allongement + cisaillement) et par raclage des cristaux de graisse et agglomérats de cristaux de graisse respectivement contre et de la paroi refroidie.

16. Dispositif selon la revendication 13, **caractérisé en ce que** le module de cisaillement / allongement (8) est intégré dans une conduite de bypass aboutissant à un réservoir agitateur, de sorte que la suspension de cristaux finement dispersée, traitée dans le module de cisaillement (8), puisse retourner dans ce réservoir agitateur pour y être mélangée avec une suspension non encore traitée mécaniquement, et qu'après quelques passages du contenu du réservoir agitateur par le module de cisaillement (8) via un robinet à 3 voies intégré (13), une commutation soit possible de la marche en circuit fermé sur l'ajout dosé dans la conduite de produit.

17. Dispositif selon la revendication 13, **caractérisé en ce qu**'une pompe de dosage (5) a été intercalée en amont du module de cisaillement (8), cette pompe permettant de régler la vitesse de traversée axiale du flux dans le module de cisaillement (8) en fonction de l'interstice de la fente, du flux massique de dosage et de la concentration des cristaux dans la suspension de cristaux d'inoculation, en fonction d'un ajout dosé, au flux de produit, d'une part de cristaux comprise entre 0,01 et 0,2 %, et que cette pompe dose la suspension de cristaux dans le flux de produit soit après que cette suspension ait traversé une fois directement le module de cisaillement (8), soit elle dose dans le flux de produit cette suspension de cristaux provenant du réservoir agitateur dans lequel elle est retournée, pour un nouveau mélange, après avoir été plusieurs fois traitée dans le module de cisaillement (8).

18. Dispositif selon l'une des revendications 13 et 15 à 17, **caractérisé en ce que** le module de cisaillement (8) est partagé axialement en deux zones et que la première zone représente une zone de réfrigération refroidie par de l'eau à une température comprise entre env. 10 et 15 °C et qui provoque ainsi une forte cristallisation (mélange de modifications β_{IV}, β_{V}, β_{VI}) dans le bain de graisse de beurre de cacao, et sachant que la seconde zone est maintenue en température avec de l'eau de refroidissement d'une température plus élevée comprise entre 25 et 30 °C, pour faire fondre les cristaux β_{VI} de beurre de cacao instables, pour accroître la part de modification β_{VI} et pour ajuster la viscosité, sachant qu'ensuite la suspension de cristaux de beurre de cacao confectionnée, contenant 10 à 30 % de cristaux comprenant eux-mêmes entre 0 et 50 % de modification de cristaux β_{V} et entre 50 et 100 % de modification de cristaux β_{VI}, est ajoutée uniformément par la pompe de dosage (5) dans le flux de produit d'un chocolat à pré-cristallisé ou d'une pâte assimilable à du chocolat contenant des parts de cristaux d'inoculation comprises entre 0,01 et 0,2 % (par rapport à la masse totale), et qu'ensuite elle est mélangée avec ménagement, homogénéité et continuellement dans le flux de produit.

19. Dispositif selon la revendication 18, **caractérisé en ce que** la fente de cisaillement, située entre la paroi extérieure du cylindre intérieur tournant et la paroi intérieure du cylindre extérieur maintenu en température, est petite au cours de la première étape de refroidissement (Ri/Ra ≥ 0,8), et qu'elle est grande dans la seconde étape (Ri/Ra ≤ 0,8), de sorte que les cristaux instables formés sous refroidissement puissant au cours de la première étape de refroidissement sont rapidement convertis en cristaux β_{V} et β_{VI} en raison du cisaillement puissant (tensions de cisaillement : 1000 - 2000 Pa), et qu'au cours de la seconde étape de refroidissement le cisaillement diminue du fait de l'agrandissement de la fente de cisaillement pour maintenir à un niveau suffisamment bas l'échauffement local supplémentaire, dû à la dissipation d'énergie visqueuse, de la suspension enrichie de cristaux.

20. Dispositif selon revendication 13, **caractérisé en ce que** via une unité de commande / régulation du module de cisaillement (8), on réalise une harmonisation de la vitesse (grandeur de réglage 1) du cylindre intérieur (le cas échéant avec les éléments incorporés), de la température de refroidissement de la paroi (grandeur de réglage 2) et/ou du temps de séjour dans le compartiment de réaction du module de cisaillement (8), temps réglé par la vitesse de la pompe de dosage (5), de telle sorte que la température de sortie de la suspension (grandeur cible / de réglage 1) se laisse régler, dans le cas du beurre de cacao, entre 30 et 34,5 °C à ± 0,25 °C près, et que la teneur en cristaux de la suspension (grandeur cible / de réglage 2) se laisse régler entre 10 et 30 % à ± 1 % près, sachant que le cisaillement / l'allongement de la suspension de cristaux conditionné par la géométrie de la fente et la vitesse permet de créer des tailles de cristaux comprises entre ≤ 10 et 20 microns (µm).

21. Dispositif selon la revendication 19, **caractérisé en ce qu**'à l'unité de commande / de régulation arrive un signal de mesure du couple mesuré sur l'arbre du module de cisaillement (8), lequel par le biais de réglages donnés de la vitesse, du flux massique et de la température de refroidissement de la paroi, permet une corrélation directe avec la concentration générée de cristaux d'inoculation, donc de réaliser un contrôle ou un pilotage de la concentration des cristaux à la sortie.

22. Dispositif selon la revendication 13, **caractérisé en ce que** le mélangeur statique (3), à intégrer dans le flux du produit (produit chocolaté) devant recevoir l'inoculation, présente une fente de traversée du flux suffisamment grande, dans laquelle la dissipation locale d'énergie visqueuse demeure suffisamment réduite, compte tenu des viscosités (d'env. 0,1 à 5 Pas) et des flux massiques imposés pertinents pour les produits chocolatés, pour éviter un échauffement local du produit au-delà de 34,5 °C (pour les germes purs de cristaux de beurre de cacao β_{VI}), et **en ce qu'**un nombre accru (≥ 10 à 12) d'éléments mélangeurs statiques sont montés en série pour garantie une qualité de mélange de 95 %.
